(19) Europäisches Patentamt
European Patent Office
Office européen des brevets

(11) EP 2 290 806 B1

(12) EUROPEAN PATENT SPECIFICATION

(45) Date of publication and mention of the grant of the patent:
**02.05.2018 Bulletin 2018/18**

(21) Application number: **10172472.2**

(22) Date of filing: **11.08.2010**

(51) Int Cl.:
***H02P 21/14*** *(2016.01)* ***H02P 21/00*** *(2016.01)*
***H02P 6/18*** *(2016.01)*

(54) **Control apparatus for synchronous motor**

Steuervorrichtung für Synchronmotoren

Appareil de commande pour moteur synchrone

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **27.08.2009 JP 2009196220**

(43) Date of publication of application:
**02.03.2011 Bulletin 2011/09**

(73) Proprietor: **Hitachi, Ltd.**
**Tokyo (JP)**

(72) Inventors:
- **Nagura, Hirokazu**
**Tokyo 100-8220 (JP)**
- **Iwaji, Yoshitaka**
**Tokyo 100-8220 (JP)**
- **Nakatsugawa, Junnosuke**
**Tokyo 100-8220 (JP)**
- **Iwasaki, Norihisa**
**Tokyo 100-8220 (JP)**

(74) Representative: **Beetz & Partner mbB**
**Patentanwälte**
**Steinsdorfstraße 10**
**80538 München (DE)**

(56) References cited:
**US-A1- 2003 052 640 US-A1- 2009 140 674**

EP 2 290 806 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND OF THE INVENTION

The present invention relates to a position/speed sensorless control apparatus for an AC motor. More particularly, it relates to a control apparatus where special consideration is given to the nonlinear characteristic caused by the magnetic-circuit saturation of a permanent-magnet synchronous motor.

Taking advantage of its small-size and high-efficiency characteristics, an AC motor, a permanent-magnet synchronous motor in particular, is increasingly expanding its application usage in such fields as home electric appliance, industry, and automobile. In particular, in recent years, there has appeared a motor where the saturation characteristic of a motor-constituting magnetic circuit becomes conspicuous as a result of its even-smaller-sized implementation. In a motor like this, its inductance, which has been addressed as a constant conventionally, varies significantly in response to a current flown therethrough. This significant variation in the inductance results in an increase in the error of a magnetic-pole position estimation value that is important in the position/speed sensorless control for the motor.

As a countermeasure against a problem like this, JP-A-2008-141835 has disclosed the following technology: Namely, the AC motor's electrical-constant set value to be used for the magnetic-pole position estimation calculation is changed in correspondence with the current flown therethrough. This technology is a one for improving the magnetic-pole position estimation accuracy by allowing a magnetic-pole position estimation calculation unit to include, as a magnetic flux table or inductance table, the nonlinear relationship between the magnetic flux and current of the synchronous motor, or the inductance and current thereof.

US 2003/0052640 A1 discloses a synchronous motor driving system in which voltage instruction values are generated on the basis of motor parameters.

US 2009/0140674 A1 discloses a control apparatus for an AC motor in which voltage instruction values are generated on the basis of motor parameters and in consideration of cross-magnetization effects.

SUMMARY OF THE INVENTION

According to JP-A-2008-141835, it becomes possible to make the magnetic-pole position estimation calculation where, when the saturation characteristic of the magnetic flux is considered, the consideration is given up to inter-axes cross-coupling magnetic fluxes. This feature makes it possible to expect an enhancement in the position/speed sensorless control characteristics. In JP-A-2008-141835, however, there exists the necessity for providing, as the magnetic flux table or inductance table, the nonlinear relationship between the magnetic flux and current of the synchronous motor, or the inductance and current thereof. On account of this necessity, whenever the motor, i.e., the control target, is changed, the table data must also be changed. This drawback results in a complexity in the setting for the control apparatus. Also, the enhancement in the magnetic-pole position estimation accuracy gives rise to the occurrence of a necessity for increasing the table size.

In contrast thereto, the present invention has been devised in view of the above-described points. Accordingly, an object of the present invention is to make it possible to implement the position/speed sensorless control merely by setting several parameters with respect to the permanent-magnet synchronous motor as well. Here, in the synchronous motor, the magnetic-flux saturation is conspicuous, and there exist the large number of inter-axes cross-coupling magnetic fluxes.

The above object is accomplished by the features of claim 1.

In order to accomplish the above-described object, in the present invention, there is provided a synchronous-motor control apparatus, including an estimation unit for estimating magnetic-pole position of a rotor, the synchronous-motor control apparatus separating a motor-current detection value into a d-axis current detection value and a q-axis current detection value on d-q-axes orthogonal rotation coordinate axes, the coordinate axes rotating in synchronization with an estimated magnetic-pole position outputted by the magnetic-pole position estimation unit, and generating a voltage instruction value $v_{dc}$* and a voltage instruction value $v_{qc}$* for a power converter independently of each other, the voltage instruction values being defined on the coordinate axes, wherein numerical values as claimed and having mutually different physical meanings are set as parameters for representing motor characteristics set into the magnetic-pole position estimation unit.

Furthermore, in the present invention, in the above-described synchronous-motor control apparatus, a fraction expression is used as an approximation expression for a q-axis inductance component of the motor used in the magnetic-pole position estimation unit, numerator of the fraction expression being constituted with a constant which is specific to the motor, and denominator thereof being constituted with a summation of a first-degree expression of the q-axis current and a first-degree expression of the d-axis current.

Furthermore, in the present invention, the parameters to be set into the fraction expression are determined as being a parameter $K_4$ for representing magnitude of the q-axis inductance value of the motor which is to be employed as a control target, a parameter $K_5$ for representing a cross-coupling degree of the q-axis inductance from the d-axis current, a parameter $K_6$ for representing a saturation degree of the q-axis inductance relative to the q-axis current, and a parameter $I_0$ for representing a current for minimizing the cross-coupling degree of the q-axis inductance from the d-axis current.

Furthermore, in the present invention, when letting the d-axis current detection value be $i_{dc}$, the q-axis current detection value be $i_{qc}$, the parameters for representing the motor characteristics be a parameter $K_4$ for representing magnitude of a q-axis inductance value of the motor which is to be employed as the control target, a parameter $K_5$ for representing a cross-coupling degree of the q-axis inductance from the d-axis current, a parameter $K_6$ for representing a saturation degree of the q-axis inductance relative to the q-axis current, and a parameter $I_0$ for representing a current for minimizing the cross-coupling degree of the q-axis inductance from the d-axis current, and an axis-error estimation value be $\Delta\theta$, a q-axis inductance component $L_q$ ($i_{dc}$, $i_{qc}$, $\Delta\theta$) of the motor used in the magnetic-pole position estimation unit is calculated using the following (Expression 1):
[Expression 1]

$$L_q\left(i_{dc}, i_{qc}, \Delta\theta\right) = \frac{K_4}{1 + K_5\left|i_{dc}\cos\Delta\theta - i_{qc}\sin\Delta\theta + I_0\right| + K_6\left|i_{dc}\sin\Delta\theta + i_{qc}\cos\Delta\theta\right|}$$

... (Expression 1)

Furthermore, in the present invention, when letting the d-axis current detection value be $i_{dc}$, the q-axis current detection value be $i_{qc}$, the parameters for representing the motor characteristics be a parameter $K_4$ for representing magnitude of a q-axis inductance value of the motor which is to be employed as the control target, a parameter $K_5$ for representing a cross-coupling degree of the q-axis inductance from the d-axis current, a parameter $K_6$ for representing a saturation degree of the q-axis inductance relative to the q-axis current, and a parameter $I_0$ for representing a current for minimizing the cross-coupling degree of the q-axis inductance from the d-axis current, and an axis-error estimation value be $\Delta\theta$, a q-axis inductance component $L_q$ ($i_{dc}$, $i_{qc}$, $\Delta\theta$) of the motor used in the magnetic-pole position estimation unit is calculated using the following (Expression 2):
[Expression 2]

$$L_q\left(i_{dc}, i_{qc}, \Delta\theta\right) = \frac{K_4}{1 + K_5\left|i_{dc} - i_{qc}\Delta\theta + I_0\right| + K_6\left|i_{dc}\Delta\theta + i_{qc}\right|}$$

... (Expression 2)

Furthermore, in the present invention, when letting the d-axis current detection value be $i_{dc}$, the q-axis current detection value be $i_{qc}$, the parameters for representing the motor characteristics be a parameter $K_4$ for representing magnitude of a q-axis inductance value of the motor which is to be employed as the control target, a parameter $K_5$ for representing a cross-coupling degree of the q-axis inductance from the d-axis current, a parameter $K_6$ for representing a saturation degree of the q-axis inductance relative to the q-axis current, and a parameter $I_0$ for representing a current for minimizing the cross-coupling degree of the q-axis inductance from the d-axis current, a q-axis inductance component $L_q$ ($i_{dc}$, $i_{qc}$) of the motor used in the magnetic-pole position estimation unit is calculated using the following (Expression 3):
[Expression 3]

$$L_q\left(i_{dc}, i_{qc}\right) = \frac{K_4}{1 + K_5\left|i_{dc} + I_0\right| + K_6\left|i_{qc}\right|}$$

... (Expression 3)

Furthermore, in the present invention, when letting the d-axis current detection value be $i_{dc}$, the q-axis current detection value be $i_{qc}$, the $d_c$-axis voltage instruction value be $v_{dc}^*$, the $q_c$-axis voltage instruction value be $v_{qc}^*$, parameters for representing a q-axis inductance of the motor be a parameter $K_4$ for representing magnitude of a q-axis inductance value of the motor which is to be employed as the control target, a parameter $K_5$ for representing a cross-coupling degree of the q-axis inductance from the d-axis current, a parameter $K_6$ for representing a saturation degree of the q-axis inductance relative to the q-axis current, and a parameter $I_0$ for representing a current for minimizing the cross-coupling degree of the q-axis inductance from the d-axis current, an armature's winding resistance of the motor be R, an axis-error estimation value be $\Delta\theta$, and an electric angular velocity of the power converter be $\omega_1$, $\Delta\theta$ is calculated using the following (Expression 4):
[Expression 4]

$$\Delta\theta = \tan^{-1}\left[\frac{v_{dc}^* - Ri_{dc} + \left(\dfrac{\omega_1 K_4 i_{qc}}{1 + K_5\left|i_{dc}\cos\Delta\theta - i_{qc}\sin\Delta\theta + I_0\right| + K_6\left|i_{dc}\sin\Delta\theta + i_{qc}\cos\Delta\theta\right|}\right)}{v_{qc}^* - Ri_{qc} - \left(\dfrac{\omega_1 K_4 i_{dc}}{1 + K_5\left|i_{dc}\cos\Delta\theta - i_{qc}\sin\Delta\theta + I_0\right| + K_6\left|i_{dc}\sin\Delta\theta + i_{qc}\cos\Delta\theta\right|}\right)}\right]$$

... (Expression 4)

Furthermore, in the present invention, when letting the d-axis current detection value be $i_{dc}$, the q-axis current detection value be $i_{qc}$, the $d_c$-axis voltage instruction value be $v_{dc}^*$, the $q_c$-axis voltage instruction value be $v_{qc}^*$, parameters for representing a q-axis inductance of the motor be a parameter $K_4$ for representing magnitude of a q-axis inductance value of the motor which is to be employed as the control target, a parameter $K_5$ for representing a cross-coupling degree of the q-axis inductance from the d-axis current, a parameter $K_6$ for representing a saturation degree of the q-axis inductance relative to the q-axis current, and a parameter $I_0$ for representing a current for minimizing the cross-coupling degree of the q-axis inductance from the d-axis current, an armature's winding resistance of the motor be R, an axis-error estimation value be $\Delta\theta$, and an electric angular velocity of the power converter be $\omega_1$, $\Delta\theta$ is calculated using the following (Expression 5):
[Expression 5]

$$\Delta\theta = \tan^{-1}\left[\frac{v_{dc}^* - Ri_{dc} + \left(\dfrac{\omega_1 K_4 i_{qc}}{1 + K_5\left|i_{dc} - i_{qc}\Delta\theta + I_0\right| + K_6\left|i_{dc}\Delta\theta + i_{qc}\right|}\right)}{v_{qc}^* - Ri_{qc} - \left(\dfrac{\omega_1 K_4 i_{dc}}{1 + K_5\left|i_{dc} - i_{qc}\Delta\theta + I_0\right| + K_6\left|i_{dc}\Delta\theta + i_{qc}\right|}\right)}\right]$$

... (Expression 5)

Furthermore, in the present invention, when letting the d-axis current detection value be $i_{dc}$, the q-axis current detection value be $i_{qc}$, the $d_c$-axis voltage instruction value be $v_{dc}^*$, the $q_c$-axis voltage instruction value be $v_{qc}^*$, parameters for representing a q-axis inductance of the motor be a parameter $K_4$ for representing magnitude of a q-axis inductance value of the motor which is to be employed as the control target, a parameter $K_5$ for representing a cross-coupling degree of the q-axis inductance from the d-axis current, a parameter $K_6$ for representing a saturation degree of the q-axis inductance relative to the q-axis current, and a parameter $I_0$ for representing a current for minimizing the cross-coupling degree of the q-axis inductance from the d-axis current, an armature's winding resistance of the motor be R, an axis-error estimation value be $\Delta\theta$, and an electric angular velocity of the power converter be $\omega_1$, $\Delta\theta$ is calculated using the following (Expression 6):
[Expression 6]

$$\Delta\theta = \tan^{-1}\left[\frac{v_{dc}^{*} - Ri_{dc} + \left(\frac{\omega_1 K_4 i_{qc}}{1 + K_5\left|i_{dc} + I_0\right| + K_6\left|i_{qc}\right|}\right)}{v_{qc}^{*} - Ri_{qc} - \left(\frac{\omega_1 K_4 i_{dc}}{1 + K_5\left|i_{dc} + I_0\right| + K_6\left|i_{qc}\right|}\right)}\right]$$

… (Expression 6)

Furthermore, in the present invention, the previous calculation value $\Delta\theta$ acquired using (Expression 4) or (Expression 5) is substituted into the axis-error estimation value $\Delta\theta$ used in the right-side calculation of (Expression 1), (Expression 2), (Expression 4), or (Expression 5).

Furthermore, in the present invention, a convergence calculation is performed in performing the calculation of (Expression 4) or (Expression 5), the convergence calculation being a calculation where the calculation value $\Delta\theta$ is repeatedly substituted into the right side of (Expression 4) or (Expression 5), the calculation value $\Delta\theta$ being acquired using the d-axis current detection value $i_{dc}$, the q-axis current detection value $i_{qc}$, the $d_c$-axis voltage instruction value $v_{dc}^*$, the $q_c$-axis voltage instruction value $v_{qc}^*$, and the electric angular velocity $\omega_1$ of the power converter, all of which remain the same by being fixed based on a zero-order hold processing.

According to the present invention, it becomes possible to implement the high-accuracy position/speed sensorless control merely by setting several parameters including the motor's magnetic-flux saturation characteristics into the control apparatus with respect to the permanent-magnet synchronous motor as well. Here, in the permanent-magnet synchronous motor, the magnetic-flux saturation is conspicuous, and there exist the large number of inter-axes cross-coupling magnetic fluxes.

BRIEF DESCRIPTION OF THE DRAWINGS

Fig. 1 is a diagram for illustrating a speed control system according to a first embodiment of the present invention;
Figs. 2A and 2B are schematic diagrams for illustrating the relationship between magnetic flux and current of an ideal PM synchronous motor;
Figs. 3A and 3B are schematic diagrams for illustrating the relationship between magnetic flux and current of a nonlinear PM synchronous motor;
Fig. 4 is a definition diagram for defining the axis error $\Delta\theta$;
Figs. 5A and 5B are schematic diagrams for illustrating the relationship between magnetic flux and current based on (Expression 10) and (Express ion 11);
Fig. 6 is a diagram for illustrating an axis-error estimation unit (non-convergence calculation scheme);
Fig. 7 is a diagram for illustrating the axis-error estimation unit (convergence calculation scheme);
Fig. 8 is an explanatory diagram for explaining the axis-error convergence process;
Fig. 9 is a diagram for illustrating the configuration of a voltage-instruction generation unit in the first and second embodiments;
Figs. 10A and 10B are diagrams for illustrating effects of the first embodiment based on the simulation;
Fig. 11 is a diagram for illustrating a torque control system according to the second embodiment of the present invention;
Fig. 12 is a diagram for illustrating a simplified speed control system according to a third embodiment of the present invention;
Fig. 13 is a diagram for illustrating the configuration of the voltage-instruction generation unit in the third embodiment;
Fig. 14 is a diagram for illustrating an application example to the railroad-vehicle driving according to a fourth embodiment of the present invention; and
Fig. 15 is a diagram for illustrating an application example to the automobile driving according to a fifth embodiment of the present invention.

DETAILED DESCRIPTION OF THE INVENTION

In the present invention, an axis-error calculation expression where consideration is given up to the cross-coupling interaction of magnetic fluxes between a d axis and a q axis is introduced into the control system. In order to explain the present invention, first of all, (Expression 7) indicates the axis-error calculation expression according to the conventional technology.
[Expression 7]

$$\Delta\theta = \tan^{-1}\left[\frac{v_{dc}^{*} - Ri_{dc} + \omega_1 L_q i_{qc}}{v_{qc}^{*} - Ri_{qc} - \omega_1 L_q i_{dc}}\right]$$

... (Expression 7)

The derivation process of the axis-error calculation expression indicated in (Expression 7) will be omitted. This is because, concerning this derivation process, the detailed description has been given in Electricity Treatise D, Vol. 124, No. 11, 2004 "Simplified Vector Control Over Home-Electric-Appliance-Directed Position Sensorless Permanent-Magnet Synchronous Motor" (which, hereinafter, will be referred to as "conventional technology 1"). In (Expression 7), $\Delta\theta$ denotes the axis error, $v_{dc}^*$ denotes the $d_c$-axis voltage instruction value, $v_{qc}^*$ denotes the $q_c$-axis voltage instruction value, $i_{dc}$ denotes the d-axis current detection value, $i_{qc}$ denotes the q-axis current detection value, $\omega_1$ denotes the rotational angular velocity of a voltage applied to the motor by a PWM inverter, R denotes the armature's winding resistance of the motor, and $L_q$ denotes the q-axis inductance. In JP-A-2008-141835, the following ideal characteristic is preconditioned: Namely, the magnetic-flux saturation, which accompanies an increase in the current, is absent in the d-axis magnetic flux and the q-axis magnetic flux of the PM motor which is to be employed as the control target. Also, the cross-coupling interaction of the magnetic fluxes between the d axis and the q axis is also absent. Figs. 2A and 2B illustrate the relationship between the magnetic flux and the current of an ideal PM synchronous motor like this. Fig. 2A illustrates the linear relationship between the d-axis current $i_d$ and the d-axis magnetic flux $\Phi_d$. The relationship expression for this linear relationship can be represented by the following (Expression 8):
[Expression 8]

$$\Phi_d(i_d) = L_d i_d + \phi_m$$

... (Expression 8)

Similarly, Fig. 2B illustrates the linear relationship between the q-axis current $i_q$ and the q-axis magnetic flux $\Phi_q$. The relationship expression for this linear relationship can be represented by the following (Expression 9):
[Expression 9]

$$\Phi_q(i_q) = L_q i_q$$

... (Expression 9)

In this way, the q-axis inductance $L_q$ used in (Expression 7) of the conventional technology 1 is the coefficient that establishes the linear relationship between the q-axis current $i_q$ and the q-axis magnetic flux $\Phi_q$. Namely, $L_q$ is equal to the constant value independently of the q-axis current $i_q$.

On the other hand, in the strong-nonlinearity PM synchronous motor, which is to be employed as the control target in the present invention, the relationship between the magnetic flux and the current generally becomes a one as illustrated in Figs. 3A and 3B. At this time, it is recognized that a constant corresponding to the q-axis inductance $L_q$ in (Expression 9) is absent, and that (Expression 7) is inapplicable. In view of this situation, in the present invention, first of all, an approximation function $\Phi_d$ ($i_d$, $i_q$) illustrated in Fig. 3A is defined selecting coefficients $K_1$, $K_2$, and $K_3$ and constants $I_0$ and cpo as its parameters, and using the following (Expression 10): Here, the approximation function $\Phi_d$ ($i_d$, $i_q$) selects $i_q$ as its parameter, and indicates the relationship between the d-axis current $i_d$ and the d-axis magnetic flux $\Phi_d$. Similarly, an approximation function $\Phi_q$ ($i_d$, $i_q$) illustrated in Fig. 3B is defined selecting coefficients $K_4$, $K_5$, and $K_6$ as its parameters, and using the following (Expression 11): Here, the approximation function $\Phi_q$ ($i_d$, $i_q$) selects $i_d$ as its parameter, and indicates the relationship between the q-axis current $i_q$ and the q-axis magnetic flux $\Phi_q$. Moreover, based on the approximation functions $\Phi_d$ ($i_d$, $i_q$) and $\Phi_q$ ($i_d$, $i_q$) defined in this way, a new axis-error estimation expression will be derived which is applicable to the strong-nonlinearity PM synchronous motor, and which is capable of becoming an alternative to (Expression 7).
[Expression 10]

$$\Phi_d(i_d, i_q) = \frac{K_1(i_d + I_0)}{1 + K_2|i_d + I_0| + K_3|i_q|} + \phi_0$$

... (Expression 10)

[Expression 11]

$$\Phi_q(i_d, i_q) = \frac{K_4 i_q}{1 + K_5|i_d + I_0| + K_6|i_q|}$$

... (Expression 11)

The voltage equation for the permanent-magnet synchronous motor having the salient property can be represented by the following (Expression 12): Here, this representation of the voltage equation is given regardless of the presence or absence of the magnetic-flux saturation, and on d-q-axes orthogonal rotation coordinate axes which are synchronized with the rotor.

[Expression 12]

$$\begin{bmatrix} v_d \\ v_q \end{bmatrix} = R\begin{bmatrix} i_d \\ i_q \end{bmatrix} + p\begin{bmatrix} \Phi_d(i_d, i_q) \\ \Phi_q(i_d, i_q) \end{bmatrix} + \omega_r\begin{bmatrix} -\Phi_q(i_d, i_q) \\ \Phi_d(i_d, i_q) \end{bmatrix}$$

... (Expression 12)

In (Expression 12), $v_d$ denotes the d-axis direction component of the motor terminal voltage, $v_q$ denotes the q-axis direction component of the motor terminal voltage, p denotes a differential operator, and $\omega_r$ denotes the electric angular velocity of the motor. Here, the d axis is defined as being a direction of the permanent-magnet magnetic flux axis of the motor. Also, the q axis is defined as being a direction resulting from advancing by 90°in the rotation direction from the d axis.

Here, the transition term in the right-side second term in (Expression 12) is neglected for simplicity. Then, substituting (Expression 10) and (Expression 11) into (Expression 12) results in acquisition of a voltage equation (Expression 13) for the permanent-magnet synchronous motor in its steady state

[Expression 13]

$$\begin{aligned}\begin{bmatrix} v_d \\ v_q \end{bmatrix} &= R\begin{bmatrix} i_d \\ i_q \end{bmatrix} + \omega_r\begin{bmatrix} -\dfrac{K_4 i_q}{1 + K_5|i_d + I_0| + K_6|i_q|} \\ \dfrac{K_1(i_d + I_0)}{1 + K_2|i_d + I_0| + K_3|i_q|} + \phi_0 \end{bmatrix} \\ &= R\begin{bmatrix} i_d \\ i_q \end{bmatrix} + \omega_r\begin{bmatrix} \dfrac{K_4}{1 + K_5|i_d + I_0| + K_6|i_q|} \\ \dfrac{K_1}{1 + K_2|i_d + I_0| + K_3|i_q|} \end{bmatrix}\begin{bmatrix} -i_q \\ i_d \end{bmatrix} + \begin{bmatrix} 0 \\ \omega_r\left(\dfrac{K_1 I_0}{1 + K_2|i_d + I_0| + K_3|i_q|} + \phi_0\right) \end{bmatrix}\end{aligned}$$

... (Expression 13)

Moreover, in (Expression 13), the replacements are performed using a d-axis inductance $L_d$ ($i_d$, $i_q$) where the magnetic fluxes is taken into consideration and which is defined by the following (Expression 14), and a q-axis inductance $L_q$ ($i_d$, $i_q$) where the magnetic fluxes is taken into consideration and which is defined by the following (Expression 15): These replacements allow (Expression 13) to be modified into the following (Expression 16):

[Expression 14]

$$L_d\left(i_d,i_q\right)=\frac{\dfrac{K_1 i_d}{1+K_2\left|i_d+I_0\right|+K_3\left|i_q\right|}}{i_d}=\frac{K_1}{1+K_2\left|i_d+I_0\right|+K_3\left|i_q\right|}$$

… (Expression 14)

[Expression 15]

$$L_q\left(i_d,i_q\right)=\frac{\dfrac{K_4 i_q}{1+K_5\left|i_d+I_0\right|+K_6\left|i_q\right|}}{I_q}=\frac{K_4}{1+K_5\left|i_d+I_0\right|+K_6\left|i_q\right|}$$

… (Expression 15)

[Expression 16]

$$\begin{bmatrix} v_d \\ v_q \end{bmatrix}=R\begin{bmatrix} i_d \\ i_q \end{bmatrix}+\omega_r\begin{bmatrix} L_q\left(i_d,i_q\right) \\ L_d\left(i_d,i_q\right) \end{bmatrix}\begin{bmatrix} -i_q \\ i_d \end{bmatrix}+\begin{bmatrix} 0 \\ \omega_r\left(L_d\left(i_d,i_q\right)I_0+\phi_0\right) \end{bmatrix}$$

… (Expression 16)

Furthermore, (Expression 16) is modified into the form of the following (Expression 17) so that the expression modification later will become easier to make: Here, the right-side third term in (Expression 17) is equivalent to an expanded induction voltage component in the steady state.

[Expression 17]

$$\begin{bmatrix} v_d \\ v_q \end{bmatrix}=R\begin{bmatrix} i_d \\ i_q \end{bmatrix}+\omega_r L_q\left(i_d,i_q\right)\begin{bmatrix} -i_q \\ i_d \end{bmatrix}+\begin{bmatrix} 0 \\ \omega_r\left(L_d\left(i_d,i_q\right)I_0+\phi_0\right)+\omega_r\left(L_d\left(i_d,i_q\right)-L_q\left(i_d,i_q\right)\right)i_d \end{bmatrix}$$

… (Expression 17)

In (Expression 17), the magnitude of the expanded induction voltage in the steady state is designated as $E_{Sx}$ as is indicated in the following (Expression 18): This operation results in acquisition of a voltage equation, which is based on the expanded induction voltage representation corresponding to the strong-nonlinearity PM synchronous motor model, as the following (Expression 19):

[Expression 18]

$$E_{Sx}=\omega_r\left(L_d\left(i_d,i_q\right)I_0+\phi_0\right)+\omega_r\left(L_d\left(i_d,i_q\right)-L_q\left(i_d,i_q\right)\right)i_d$$

… (Expression 18)

[Expression 19]

$$\begin{bmatrix} v_d \\ v_q \end{bmatrix} = R\begin{bmatrix} i_d \\ i_q \end{bmatrix} + \omega_r L_q\left(i_d, i_q\right)\begin{bmatrix} -i_q \\ i_d \end{bmatrix} + \begin{bmatrix} 0 \\ E_{Sx} \end{bmatrix}$$

… (Expression 19)

[Expression 20]

$$\Delta\theta = \theta_{dc} - \theta_d$$

… (Expression 20)

By the way, in the position sensorless control, the actual rotor position cannot be detected. In view of this situation, the control is performed on a coordinate system where the estimated position of the rotor is selected as its reference. Hereinafter, this coordinate system used for the control will be referred to as "virtual rotor coordinate axes ($d_c$-$q_c$ coordinate axes)", and the rotational angular velocity of the $d_c$-$q_c$ coordinate axes is denoted by $\omega_1$. Also, a shift between the d-q coordinate axes where the rotor position is selected as its reference and the $d_c$-$q_c$ coordinate axes will be referred to as "the axis error $\Delta\theta$". As is defined by (Expression 20), the axis error $\Delta\theta$ becomes the phase angle of the $d_c$-$q_c$ coordinate axes seen from the d-q coordinate axes (Fig. 4), when letting the angle from the U phase to the d axis be $\theta_d$, and the electric angle from the U phase to the $d_c$ axis be $\theta_{dc}$. Accordingly, a coordinate transformation matrix C indicated by the following (Expression 21) is made applicable to the coordinate transformation from the d-q coordinate axes to the $d_c$-$q_c$ coordinate axes: Here, since the matrix C is the function of the axis error $\Delta\theta$, the matrix C will be hereinafter denoted as C ($\Delta\theta$) for pointing out it clearly. Also, an inverse matrix $C^{-1}$ for the coordinate transformation matrix C becomes equal to the following (Expression 22): The following (Expression 23) and (Expression 24) indicate coordinate-transformation examples of the voltage and current vectors using these matrices C ($\Delta\theta$) and $C^{-1}$ ($\Delta\theta$).

[Expression 21]

$$C(\Delta\theta) = \begin{bmatrix} \cos\Delta\theta & \sin\Delta\theta \\ -\sin\Delta\theta & \cos\Delta\theta \end{bmatrix}$$

… (Expression 21)

[Expression 22]

$$C^{-1}(\Delta\theta) = \begin{bmatrix} \cos\Delta\theta & -\sin\Delta\theta \\ \sin\Delta\theta & \cos\Delta\theta \end{bmatrix}$$

… (Expression 22)

[Expression 23]

$$\begin{bmatrix} v_{dc} \\ v_{qc} \end{bmatrix} = C(\Delta\theta)\begin{bmatrix} v_d \\ v_q \end{bmatrix} \qquad \begin{bmatrix} i_{dc} \\ i_{qc} \end{bmatrix} = C(\Delta\theta)\begin{bmatrix} i_d \\ i_q \end{bmatrix}$$

… (Expression 23)

[Expression 24]

$$\begin{bmatrix} v_d \\ v_q \end{bmatrix} = C^{-1}(\Delta\theta)\begin{bmatrix} v_{dc} \\ v_{qc} \end{bmatrix} \qquad \begin{bmatrix} i_d \\ i_q \end{bmatrix} = C^{-1}(\Delta\theta)\begin{bmatrix} i_{dc} \\ i_{qc} \end{bmatrix}$$

... (Expression 24)

Next, (Expression 19) is modified into a voltage equation on the $d_c$-$q_c$ coordinate axes by taking advantage of the above-described coordinate transformation matrix C ($\Delta\theta$). Assuming that the steady state holds, the electric angular velocity $\omega_r$ of the motor and the rotational angular velocity $\omega_1$ of the $d_c$-$q_c$ coordinate axes are equal to each other. Consequently, $\omega_r = \omega_1$ is set in (Expression 19), and further, both sides of (Expression 19) are multiplied by the matrix C ($\Delta\theta$) from left. This operation results in acquisition of the following (Expression 25):
[Expression 25]

$$C(\Delta\theta)\begin{bmatrix} v_d \\ v_q \end{bmatrix} = C(\Delta\theta)R\begin{bmatrix} i_d \\ i_q \end{bmatrix} + C(\Delta\theta)\omega_1 L_q(i_d, i_q)\begin{bmatrix} -i_q \\ i_d \end{bmatrix} + C(\Delta\theta)\begin{bmatrix} 0 \\ E_{Sx} \end{bmatrix}$$

... (Expression 25)

[Expression 26]

$$\begin{bmatrix} v_{dc} \\ v_{qc} \end{bmatrix} = R\begin{bmatrix} i_{dc} \\ i_{qc} \end{bmatrix} + \omega_1 L_q(i_d, i_q)\begin{bmatrix} -i_{qc} \\ i_{dc} \end{bmatrix} + E_{Sx}\begin{bmatrix} \sin\Delta\theta \\ \cos\Delta\theta \end{bmatrix}$$

... (Expression 26)

Assuming that the steady state holds, the electric angular velocity $\omega_r$ of the motor and the rotational angular velocity $\omega_1$ of the $d_c$-$q_c$ coordinate axes are equal to each other. Consequently, $\omega_r = \omega_1$ is set in (Expression 19), and further, both sides of (Expression 19) are multiplied by the matrix C ($\Delta\theta$) from left. This operation results in acquisition of the following (Expression 25): Moreover, substituting (Expression 23) into (Expression 25) results in acquisition of (Expression 26).

Furthermore, substituting (Expression 15) into (Expression 26), and transforming $i_d$ and $i_q$ inside $L_q$ ($i_d$, $i_q$) into $i_{dc}$ and $i_{qc}$ results in acquisition of a voltage equation on the virtual rotor coordinate axes corresponding to the strong-nonlinearity PM synchronous motor model as the following (Expression 27):
[Expression 27]

$$\begin{aligned} \begin{bmatrix} v_{dc} \\ v_{qc} \end{bmatrix} &= R\begin{bmatrix} i_{dc} \\ i_{qc} \end{bmatrix} + \frac{\omega_1 K_4}{1 + K_5\left|i_d + I_0\right| + K_6\left|i_q\right|}\begin{bmatrix} -i_{qc} \\ i_{dc} \end{bmatrix} + E_{Sx}\begin{bmatrix} \sin\Delta\theta \\ \cos\Delta\theta \end{bmatrix} \\ &= R\begin{bmatrix} i_{dc} \\ i_{qc} \end{bmatrix} + \frac{\omega_1 K_4}{1 + K_5\left|i_{dc}\cos\Delta\theta - i_{qc}\sin\Delta\theta + I_0\right| + K_6\left|i_{dc}\sin\Delta\theta + i_{qc}\cos\Delta\theta\right|}\begin{bmatrix} -i_{qc} \\ i_{dc} \end{bmatrix} + E_{Sx}\begin{bmatrix} \sin\Delta\theta \\ \cos\Delta\theta \end{bmatrix} \end{aligned}$$

... (Expression 27)

Meanwhile, the $d_c$-axis voltage instruction value $v_{dc}$* and the $d_c$-axis direction component $v_{dc}$ of the motor terminal voltage are substantially equal to each other regardless of the axis error $\Delta\theta$. Similarly, the $q_c$-axis voltage instruction value $v_{qc}$* and the $q_c$-axis direction component $v_{qc}$ of the motor terminal voltage are substantially equal to each other. Accordingly, replacing $v_{dc}$ and $v_{qc}$ in (Expression 27) by $v_{dc}$* and $v_{qc}$* respectively, and solving (Expression 27) as to $\Delta\theta$ results in determination of the axis-error estimation expression in the steady state as the following (Expression 28): In (Expression 28), especially when $\Delta\theta$ is small, such approximations as $\cos\Delta\theta \fallingdotseq 1$ and $\sin\Delta\theta \fallingdotseq \Delta\theta$ hold satisfactorily. Consequently, the following (Expression 29) is available as an axis-error estimation approximation expression:

Moreover, when $\Delta\theta$ is sufficiently small, and when a slight amount of axis error is tolerable, the following (Expression 30) is also available which is obtained by setting $\Delta\theta = 0$ in the right side of (Expression 28) or (Expression 29):

[Expression 28]

$$\Delta\theta = \tan^{-1}\left[\frac{v_{dc}^{*} - Ri_{dc} + \left(\dfrac{\omega_1 K_4 i_{qc}}{1+K_5\left|i_{dc}\cos\Delta\theta - i_{qc}\sin\Delta\theta + I_0\right| + K_6\left|i_{dc}\sin\Delta\theta + i_{qc}\cos\Delta\theta\right|}\right)}{v_{qc}^{*} - Ri_{qc} - \left(\dfrac{\omega_1 K_4 i_{dc}}{1+K_5\left|i_{dc}\cos\Delta\theta - i_{qc}\sin\Delta\theta + I_0\right| + K_6\left|i_{dc}\sin\Delta\theta + i_{qc}\cos\Delta\theta\right|}\right)}\right]$$

… (Expression 28)

[Expression 29]

$$\Delta\theta = \tan^{-1}\left[\frac{v_{dc}^{*} - Ri_{dc} + \left(\dfrac{\omega_1 K_4 i_{qc}}{1+K_5\left|i_{dc} - i_{qc}\Delta\theta + I_0\right| + K_6\left|i_{dc}\Delta\theta + i_{qc}\right|}\right)}{v_{qc}^{*} - Ri_{qc} - \left(\dfrac{\omega_1 K_4 i_{dc}}{1+K_5\left|i_{dc} - i_{qc}\Delta\theta + I_0\right| + K_6\left|i_{dc}\Delta\theta + i_{qc}\right|}\right)}\right]$$

… (Expression 29)

[Expression 30]

$$\Delta\theta = \tan^{-1}\left[\frac{v_{dc}^{*} - Ri_{dc} + \left(\dfrac{\omega_1 K_4 i_{qc}}{1+K_5\left|i_{dc} + I_0\right| + K_6\left|i_{qc}\right|}\right)}{v_{qc}^{*} - Ri_{qc} - \left(\dfrac{\omega_1 K_4 i_{dc}}{1+K_5\left|i_{dc} + I_0\right| + K_6\left|i_{qc}\right|}\right)}\right]$$

… (Expression 30)

The position/speed sensorless control system is configured by taking advantage of the three axis-error estimation expressions (Expression 28), (Expression 29), and (Expression 30) derived as described above. As long as (Expression 10) and (Expression 11) accurately represent the nonlinear characteristic of the PM synchronous motor, this configuration makes it possible to expect implementation of an ideal position/speed sensorless control. Here, the ideal control refers to a one which exhibits less axis error, and which is executable regardless of the magnetic-flux saturation and the inter-axes cross-coupling magnetic fluxes on the PM synchronous motor side. Then, the comparison is made between the approximation levels of (Expression 10) and (Expression 11) and target values which are calculated using the magnetic-field analysis with a certain motor selected as the example.

Fig. 5A is a graph where, $i_d$ is set on the transverse axis, and with respect to the magnetic flux $\Phi_d$ at the time when $i_q$ is changed as such 0A, 100A, 200A, and 300A, the comparison is made between the target values calculated using the magnetic-field analysis and the approximation values calculated using the approximation function expression $\Phi_d$ ($i_d$, $i_q$) of (Expression 10). Also, Fig. 5B is a graph where, $i_q$ is set on the transverse axis, and with respect to the magnetic flux $\Phi_q$ at the time when $i_d$ is changed as such - 200A, - 100A, 0A, 100A, and 200A, the comparison is made between the target values calculated using the magnetic-field analysis and the approximation values calculated using the approximation function expression $\Phi_q$ ($i_d$, $i_q$) of (Expression 11).

From the comparison results illustrated in Fig. 5A and Fig. 5B, the following fact can be confirmed: Namely, the employment of the approximation function expressions of (Expression 10) and (Expression 11) makes it possible to satisfactorily approximate the influences of $i_d$ and $i_q$ which are respectively exerted onto the d-axis magnetic flux $\Phi_d$ and

the q-axis magnetic flux $\Phi_q$ even in the case of the synchronous motor with the nonlinear characteristic. Here, the strong influences of the magnetic-flux saturation and the inter-d-q-axes cross-coupling magnetic fluxes are exerted onto the synchronous motor. Consequently, it is possible to implement the high-accuracy calculations of (Expression 28), (Expression 29), and (Expression 30) based on (Expression 10) and (Expression 11).

As having been described so far, in the present invention, the nonlinear functions between the magnetic flux and the current are prepared. Moreover, the axis-error estimation calculation expressions, where the magnetic-flux saturation characteristic is taken into consideration, are derived from these nonlinear functions via the expression modification. Then, these calculation expressions derived are executed. This process allows the position/speed sensorless control based on the high-accuracy magnetic-pole position estimation to be implemented with respect to the permanent-magnet synchronous motor as well, where the magnetic-flux saturation is conspicuous, and where there exist the large number of inter-axes cross-coupling magnetic fluxes.

Hereinafter, referring to the drawings, the explanation will be given below concerning embodiments of the control apparatus for the AC motor. Incidentally, in the following embodiments, the explanation will be given employing the permanent-magnet synchronous motor (which, hereinafter, will be abbreviated as "PM motor") as the AC motor. The control apparatus, however, is also implementable for another motor (such as, e.g., winding synchronous motor, reluctance motor, and induction motor).

[Embodiment 1]

Fig. 1 is a block diagram for illustrating the configuration of a first embodiment of the synchronous-motor control apparatus according to the present invention. Fig. 1 illustrates the configuration of the position/speed sensorless-based speed control system. This system includes the following configuration components: A speed-instruction generation unit 1 for providing a speed instruction $\omega_1$* to a PM motor 8, an $i_d$* generation unit 4 for generating a d-axis current instruction value $i_d$*, a subtractor 2 for outputting a speed deviation $\omega_e$ by subtracting the rotational angular velocity $\omega_1$ of a voltage from $\omega_1$*, the angular velocity $\omega_1$ being outputted by a PLL controller 13, and the voltage being applied to the PM motor 8 by a PWM inverter 7, a speed controller 3 for making a proportional integral calculation with respect to $\omega_e$, and outputting a q-axis current instruction value $i_q$*, a voltage-instruction generation unit 5 for inputting $i_d$*, $i_q$*, the d-axis current detection value $i_{dc}$, the q-axis current detection value $i_{qc}$, and $\omega_1$, and outputting the $d_c$-axis voltage instruction value $v_{dc}$* and the $q_c$-axis voltage instruction value $v_{qc}$* to a d-q-coordinates inverse transformation unit 6, an axis-error estimation unit 12 for calculating the axis error $\Delta\theta$ by inputting $v_{dc}$*, $v_{qc}$*, $i_{dc}$, $i_{qc}$, and $\omega_1$, and taking advantage of (Expression 28), (Expression 29), or (Expression 30), and a parameter $K_4$ for representing the magnitude of the q-axis inductance value of the PM motor 8, a parameter $K_5$ for representing a cross-coupling degree of the q-axis inductance of the PM motor 8 from the d-axis current, a parameter $K_6$ for representing a saturation degree of the q-axis inductance of the PM motor 8 relative to the q-axis current, a parameter $I_0$ for representing a current for minimizing the cross-coupling degree of the q-axis inductance from the d-axis current, these parameters being inputted from a parameter setting unit 14, and the armature's winding resistance R of the PM motor 8, the PLL controller 13 for outputting the rotational angular velocity $\omega_1$ by making a proportional integral calculation or proportional calculation with respect to $\Delta\theta$, and performing a control for making $\Delta\theta$ smaller, an integrator 15 for integrating $\omega_1$, and outputting the electric angle $\theta_{dc}$ of the voltage applied to the PM motor 8 by the PWM inverter 7, the d-q-coordinates inverse transformation unit 6 for converting $v_{dc}$* and $v_{qc}$* to three-phase AC voltage instructions $V_u$*, $V_v$*, and $V_w$* by taking advantage of the electric angle $\theta_{dc}$, the PWM inverter 7 for generating three-phase AC voltages on the basis of the three-phase AC voltage instructions $V_u$*, $V_v$*, and $V_w$*, a current detector 10 for detecting the U-phase current $i_u$ outputted by the PWM inverter 7, a current detector 9 for detecting the W-phase current $i_w$ outputted by the PWM inverter 7, and a d-q-coordinates transformation unit 11 for taking advantage of the electric angle $\theta_{dc}$, and thereby coordinate-transforming the detected currents $i_u$ and $i_w$ to the components $i_{dc}$ and $i_{qc}$ on the respective $d_c$ axis and $q_c$ axis that are orthogonal to each other on the rotation coordinate system of the PM motor 8.

Next, referring to a block-line diagram illustrated in Fig. 9, the explanation will be given below regarding the configuration of the voltage-instruction generation unit 5. The configuration of the voltage-instruction generation unit 5 illustrated in Fig. 9 is substantially the same as the configuration in the contents described in Chap. 4 of "Realistic Theory and Design of AC Servo System" (General Electronic Publishing Corp.) edited/written by Hidehiko Sugimoto (which, hereinafter, will be referred to as "conventional technology 2"). In Fig. 9, $i_d$* denotes the d-axis current instruction value, $i_q$* denotes the q-axis current instruction value, $i_{dc}$ denotes the d-axis current detection value, and $i_{qc}$ denotes the q-axis current detection value. In this conventional technology 2, a subtractor 120 calculates a d-axis current deviation $\Delta i_d$ between $i_d$* and $i_{dc}$, and a subtractor 121 calculates a q-axis current deviation $\Delta i_q$ between $i_q$* and $i_{qc}$. Next, in a gain 122, a d-axis magnetic-flux deviation $\Delta\Phi_d$ is calculated by multiplying the d-axis current deviation $\Delta i_d$ by the d-axis inductance $L_d$ of the PM motor 8. Similarly, in a gain 128, a q-axis magnetic-flux deviation $\Delta\Phi_q$ is calculated by multiplying the q-axis current deviation $\Delta i_q$ by the q-axis inductance $L_q$ of the PM motor 8. The respective-axes magnetic-flux deviations $\Delta\Phi_d$ and $\Delta\Phi_q$ obtained in this way can be considered as being compensation amounts for the respective-axes magnetic-flux components corresponding to the respective-axes current deviations $\Delta i_d$ and $\Delta i_q$. In the subsequent gains 125 and 131, values are outputted which are obtained by multiplying the respective-axes magnetic-flux deviations $\Delta\Phi_d$ and $\Delta\Phi_q$ by a current-control response angular frequency $\omega_{acr}$ (rad/sec). Then, these respective values obtained are inputted into adders 126 and 132 for calculating voltage instruction values $v_d'^*$ and $v_q'^*$ before a voltage non-cross-coupling control. The above-described process makes it possible to configure a current feedback control system on each axis where the winding-current magnetic flux of the PM motor 8 is taken into consideration. Meanwhile, respective integrators 123 and 129, which are equipped with the gain$\omega_{acr}$ (rad/sec), input therein the respective-axes current deviations $\Delta i_d$ and $\Delta i_q$. Then, the integrators 123 and 129 output $i_d'$ and $i_q'$ which are obtained by multiplying the integration values of $\Delta i_d$ and $\Delta i_q$ by the current-control response angular frequency $\omega_{acr}$ (rad/sec). Moreover, gains 124 and 130 output values which are obtained by multiplying $i_d'$ and $i_q'$ by the armature's winding resistance R of the PM motor 8. Then, these respective values obtained are inputted into the adders 126 and 132 for calculating the voltage instruction values $v_d'^*$ and $v_q'^*$ before the voltage non-cross-coupling control. The above-described process makes it possible to configure a current feedback control system on each axis where a voltage drop due to the armature's winding resistance R of the PM motor 8 is taken into consideration. Furthermore, the voltage non-cross-coupling control is configured as follows: Namely, at the time of generating the $d_c$-axis voltage instruction value $v_{dc}^*$, in a gain 134, the q-axis magnetic flux $\Phi_q$ is calculated by multiplying $i_{qc}$ by $L_q$. Also, in a multiplier 135, a speed induction voltage $\Phi_q\omega_1$, which is generated by the q-axis magnetic flux $\Phi_q$ into the d-axis direction, is calculated by multiplying $\Phi_q$ by $\omega_1$. In a subtractor 127, the $d_c$-axis voltage instruction value $v_{dc}^*$ is outputted which is obtained by subtracting $\Phi_q\omega_1$ from the d-axis voltage instruction value $v_d'^*$ before the voltage non-cross-coupling control. This process makes it possible to cancel out the q-axis magnetic flux $\Phi_q$-originated speed induction voltage $\Phi_q\omega_1$, which is caused to occur by $\Phi_q$ in the d-axis direction inside the PM motor 8. The process is basically the same at the time of generating the $q_c$-axis voltage instruction value $v_{qc}^*$ as well. Namely, in a gain 136, a d-axis current magnetic flux $\Phi_{id}$ is calculated by multiplying $i_d$ by $L_d$. Then, in an adder 137, the d-axis magnetic flux $\Phi_d$ is calculated by adding a permanent-magnet magnetic flux $\Phi_m$ in the d-axis direction to the d-axis current magnetic flux $\Phi_{id}$. Next, in a multiplier 138, a speed induction voltage $\Phi_d\omega_1$, which is generated by the d-axis magnetic flux $\Phi_d$ into a direction opposite to the q-axis direction, is calculated by multiplying $\Phi_d$ by $\omega_1$. Moreover, in an adder 133, the $q_c$-axis voltage instruction value $v_{qc}^*$ is outputted which is obtained by adding $\Phi_d\omega_1$ to the q-axis voltage instruction value $v_q'^*$ before the voltage non-cross-coupling control. This process makes it possible to cancel out the d-axis magnetic flux $\Phi_d$-originated speed induction voltage $\Phi_d\omega_1$, which is caused to occur by $\Phi_d$ in the direction opposite to the q-axis direction inside the PM motor 8. Also, the following (Expression 31) and (Expression 32), which result from setting $i_d = i_q = 0$ in (Expression 14) and (Expression 15), are used as the motor-characteristics-representing inductance parameters $L_d$ and $L_q$ to be set into the voltage-instruction generation unit 5 illustrated in Fig. 9: Also, the following (Expression 33), which results from setting $i_d = i_q = 0$ in (Expression 10), is used as the permanent-magnet magnetic flux $\Phi_m$:

[Expression 31]

$$L_d = L_d(0,0) = \frac{K_1}{1+K_2|I_0|}$$

... (Expression 31)

[Expression 32]

$$L_q = L_q(0,0) = \frac{K_4}{1+K_5|I_0|}$$

... (Expression 32)

[Expression 33]

$$\Phi_m = \Phi_d(0,0) = \frac{K_1 I_0}{1+K_2|I_0|} + \phi_0$$

... (Expression 33)

Next, referring to a block-line diagram illustrated in Fig. 6, the explanation will be given below concerning the configuration of the axis-error estimation unit 12. Fig. 6 represents (Expression 28) through the use of the block-line diagram, and its calculation result is equal to (Expression 28). The configuration indicated by the block-line diagram in Fig. 6 is as follows: Zero-order holders 50, 51, 52, 53, and 54 input $v_{dc}$*, $v_{qc}$*, $i_{dc}$, $i_{qc}$, and $\omega_1$, respectively, and sample-hold them during Ts [sec], and output them, respectively. The parameter setting unit 14 gain-sets $K_4$, $K_5$, and $K_6$ respectively with respect to variable gains 72, 66, and 67 which are equivalent to the coefficients of (Expression 28), and gain-sets the parameter R with respect to variable gains 77 and 78, then adding the parameter $I_0$ to an adder 63. A sample delayer 86 delays, by the time-interval of Ts [sec], the value of the axis error $\Delta\theta$ outputted by a limiter 85, then outputting the delayed axis error $\Delta\theta$ as $\Delta\theta_{bk}$. A cosine function 55 inputs $\Delta\theta_{bk}$ outputted by the sample delayer 86, then outputting cos ($\Delta\theta_{bk}$). A sine function 56 inputs $\Delta\theta_{bk}$ outputted by the sample delayer 86, then outputting sin ($\Delta\theta_{bk}$). A multiplier 57 performs a multiplication of cos ($\Delta\theta_{bk}$) outputted by the cosine function 55 and $i_{dc}$ outputted by the zero-order holder 52. A multiplier 58 performs a multiplication of cos ($\Delta\theta_{bk}$) outputted by the cosine function 55 and $i_{qc}$ outputted by the zero-order holder 53. A multiplier 59 performs a multiplication of sin ($\Delta\theta_{bk}$) outputted by the sine function 56 and $i_{qc}$ outputted by the zero-order holder 53. A multiplier 60 performs a multiplication of sin ($\Delta\theta_{bk}$) outputted by the sine function 56 and $i_{dc}$ outputted by the zero-order holder 52. A subtractor 61 subtracts the output of the multiplier 59 from the output of the multiplier 57. An adder 62 performs an addition of the output of the multiplier 58 and the output of the multiplier 60. An adder 63 performs an addition of the output of the subtractor 61 and the parameter $I_0$ outputted by the parameter setting unit 14. An absolute-value calculator 64 inputs the output value of the adder 63, then outputting its absolute value. An absolute-value calculator 65 inputs the output value of the adder 62, then outputting its absolute value. The variable gain 66 inputs the output of the absolute-value calculator 64, then multiplying the output by $K_5$, and outputting its multiplication value. The variable gain 67 inputs the output of the absolute-value calculator 65, then multiplying the output by $K_6$, and outputting its multiplication value. An adder 68 performs an addition of the outputs of the variable gains 66 and 67. A constant 69 outputs a value 1. An adder 70 performs an addition of the outputs of the adder 68 and the constant 69. A divider 71 divides the value 1 outputted by the constant 69 by the output of the adder 70. The variable gain 72 inputs the output of the divider 71, then multiplying the output by $K_4$, and outputting its multiplication value. A multiplier 73 performs a multiplication of the output of the variable gain 72 and $i_{qc}$ outputted by the zero-order holder 53. A multiplier 74 performs a multiplication of the output of the variable gain 72 and $i_{dc}$ outputted by the zero-order holder 52. A multiplier 75 performs a multiplication of the output of the multiplier 73 and $\omega_1$ outputted by the zero-order holder 54. A multiplier 76 performs a multiplication of the output of the multiplier 74 and $\omega_1$ outputted by the zero-order holder 54. The variable gain 77 multiplies $i_{dc}$ outputted by the zero-order holder 52 by R. The variable gain 78 multiplies $i_{qc}$ outputted by the zero-order holder 53 by R. A subtractor 79 subtracts the output of the variable gain 77 from $v_{dc}$* outputted by the zero-order holder 50. A subtractor 80 subtracts the output of the variable gain 78 from $v_{qc}$* outputted by the zero-order holder 51. An adder 81 performs an addition of the output of the subtractor 79 and the output of the multiplier 75. A subtractor 82 subtracts the output of the multiplier 76 from the output of the subtractor 80. A divider 83 divides the output of the adder 81 by the output of the subtractor 82. A $\tan^{-1}$ function 84 calculates an arctangent with respect to the output of the divider 83, then outputting the arctangent. The limiter 85 sets upper-limit and lower-limit values from $-\pi/2$ to $\pi/2$ with respect to the output of the $\tan^{-1}$ function 84, then outputting the upper-limit and lower-limit values.

According to the above-described configuration illustrated in Fig. 6, it turns out that the right side of (Expression 28) is calculated using the axis error $\Delta\theta$ which is previous by the time-interval of the one calculation period Ts [sec]. Here, however, an adequate calculation accuracy is made obtainable if the calculation period Ts is sufficiently short, or if a time variation in the axis error $\Delta\theta$ is small. In particular, in the usage where the axis error $\Delta\theta$ will not become significantly large, such as less sudden acceleration/deceleration and load external-disturbance, (Expression 29) is made available instead of (Expression 28). This case of (Expression 29) is made implementable by replacing the cosine function 55 by the constant 1, and the sine function 56 by the gain 1 in the block-line diagram in Fig. 6. This implementation of (Expression 29) makes it possible to delete not only the trigonometric functions 55 and 56, but also the multipliers 57 and 58 that are linked to the output of the cosine function 55. Accordingly, there is an advantage of being capable of lessening the calculation processing. Moreover, in the usage where the axis error $\Delta\theta$ will not become significantly large, (Expression 30) is made available instead of (Expression 28). This case of (Expression 30) is made implementable by replacing the cosine function 55 by the constant 1, and the sine function 56 by the gain 0 in the block-line diagram in Fig. 6. This implementation of (Expression 30) makes it possible to delete not only the trigonometric functions 55 and 56, but also the multipliers 57, 58, 59, and 60 and the subtractor 61 and the adder 62 that are linked to the outputs of the cosine function 55 and the sine function 56. Consequently, there is an advantage of being capable of lessening the calculation processing even further.

Next, the effects of the first embodiment are illustrated based on its simulation results. Figs. 10A and 10B are diagrams for illustrating the waveforms of respective portions based on the simulations in a case where the axis-error calculation expression (Expression 7) according to the conventional technology 1 is used in the axis-error estimation unit 12, and a case where the axis-error calculation expression (Expression 28) is used in the axis-error estimation unit 12, both cases being implemented in the speed control system of the first embodiment illustrated in Fig. 1. The waveforms ranging from 160 to 165 illustrated in Fig. 10A are the results acquired using the axis-error calculation expression (Expression 7) according to the conventional technology 1, and the waveforms ranging from 166 to 171 illustrated in Fig. 10B are the results acquired using the axis-error calculation expression (Expression 28). In the comparison between both cases, the configuration and conditions are identical to each other except for the axis-error estimation unit 12 itself. Also, 70-[N · m] step-like load torques are assumed and given just like the waveforms 160 and 166 at a point-in-time 0.1 [s]. The $i_{dc}$ variation at this time corresponds to the waveforms 161 and 167, and the $i_{qc}$ variation at this time corresponds to the waveforms 162 and 168. Both of the currents $i_{dc}$ and $i_{qc}$ are made controllable with the use of (Expression 28). Also, the speed instruction $\omega_1{}^*$ at this time corresponds to the waveforms 163 and 169, which are constant values. Meanwhile, $\omega_1$ at this time corresponds to the waveforms 164 and 170. In the first embodiment where (Expression 28) is used, the waveform exhibits only a small variation, which implies implementation of the stable operation. The graphs at the lower-most stage indicate estimated errors of the estimated axis errors from the true axis errors. These graphs indicate that the axis-error estimated error 171 based on (Expression 28) becomes smaller as compared with the axis-error estimated error 165 based on (Expression 7). In particular, in (Expression 28), the steady-time axis-error estimated error after a point-in-time 0.6 [s] becomes equal to substantially zero, which is implementation of the ideal state. Consequently, according to the present embodiment illustrated in Fig. 1 and configured using the axis-error estimation unit illustrated in Fig. 6, with respect to the PM synchronous motor as well, where the magnetic-flux saturation is conspicuous, and where there exist the large number of inter-axes cross-coupling magnetic fluxes, it becomes possible to implement the position/speed sensorless control based on the high-accuracy magnetic-pole position estimation.

[Embodiment 2]

In the first embodiment, the speed control system of the configuration illustrated in Fig. 1 has been implemented by taking advantage of the axis-error estimation expression represented by (Expression 28). In contrast thereto, in a second embodiment which will be explained hereinafter, a torque control system based on the position/speed sensorless control will be configured by taking advantage of the axis-error estimation unit whose configuration is the same as the one in the first embodiment. On account of this circumstance, in the second embodiment as well, Fig. 9 for illustrating the configuration of the voltage-instruction generation unit 5, and Fig. 6 for illustrating that of the axis-error estimation unit 12 are the same as in the case of the first embodiment. Fig. 11 is a block diagram for illustrating the configuration of the present second embodiment. This torque control system in the second embodiment includes the following configuration components: A torque-instruction generation unit 181 for providing a torque instruction $\tau^*$ to the PM motor 8, the $i_d{}^*$ generation unit 4 for generating the d-axis current instruction value $i_d{}^*$, a gain 180 for outputting the q-axis current instruction value $i_q{}^*$ by dividing the torque instruction $\tau^*$ by a torque constant $k_t$, the voltage-instruction generation unit 5 for inputting $i_d{}^*$, $i_q{}^*$, the d-axis current detection value $i_{dc}$, the q-axis current detection value $i_{qc}$, and $\omega_1$, and outputting the $d_c$-axis voltage instruction value $v_{dc}{}^*$ and the $q_c$-axis voltage instruction value $v_{qc}{}^*$ to the d-q-coordinates inverse transformation unit 6, the axis-error estimation unit 12 for calculating the axis error $\Delta\theta$ by inputting $v_{dc}{}^*$, $v_{qc}{}^*$, $i_{dc}$, $i_{qc}$, and $\omega_1$, and taking advantage of (Expression 28), (Expression 29), or (Expression 30), and the parameter $K_4$ for representing the magnitude of the q-axis inductance value of the PM motor 8, the parameter $K_5$ for representing the cross-coupling degree of the q-axis inductance of the PM motor 8 from the d-axis current, the parameter $K_6$ for representing the saturation degree of the q-axis inductance of the PM motor 8 relative to the q-axis current, the parameter $I_0$ for representing the current for minimizing the cross-coupling degree of the q-axis inductance from the d-axis current, these parameters being inputted from the parameter setting unit 14, and the armature's winding resistance R of the PM motor 8, the PLL controller 13 for outputting the rotational angular velocity $\omega_1$ by making the proportional integral calculation or proportional calculation with respect to $\Delta\theta$, and performing the control for making $\Delta\theta$ smaller, the integrator 15 for integrating $\omega_1$, and outputting the electric angle $\theta_{dc}$ of the voltage applied to the PM motor 8 by the PWM inverter 7, the d-q-coordinates inverse transformation unit 6 for converting $v_{dc}{}^*$ and $v_{qc}{}^*$ to the three-phase AC voltage instructions $V_u{}^*$, $V_v{}^*$, and $V_w{}^*$ by taking advantage of the electric angle $\theta_{dc}$, the PWM inverter 7 for generating the three-phase AC voltages on the basis of the three-phase AC voltage instructions $V_u{}^*$, $V_v{}^*$, and $V_w{}^*$, the current detector 10 for detecting the U-phase current $i_u$ outputted by the PWM inverter 7, the current detector 9 for detecting the W-phase current $i_w$ outputted by the PWM inverter 7, and the d-q-coordinates transformation unit 11 for taking advantage of the electric angle $\theta_{dc}$, and thereby coordinate-transforming the detected currents $i_u$ and $i_w$ to the components $i_{dc}$ and $i_{qc}$ on the respective $d_c$ axis and $q_c$ axis that are orthogonal to each other on the rotation coordinate system of the PM motor 8.

According to the present second embodiment described so far, even in the case of the torque control system, and with respect to the PM synchronous motor as well, it becomes possible to implement the position/speed sensorless control based on the high-accuracy magnetic-pole position estimation. Here, in the PM synchronous motor, the magnetic-flux saturation is conspicuous, and there exist the large number of inter-axes cross-coupling magnetic fluxes.

[Embodiment 3]

In the first embodiment, the high-accuracy speed control system has been configured by taking advantage of the speed controller and the current control loop. In contrast thereto, in a third embodiment, the axis-error estimation expressions (Expression 28), (Expression 29), or (Expression 30) will be applied to a simplified speed control system which includes none of the speed controller and the current control system. Incidentally, concerning the simplified speed control system which becomes the basis of the present embodiment, the detailed description has been given in Electricity Treatise D, Vol. 124, No. 11, 2004 "Simplified Vector Control Over Home-Electric-Appliance-Directed Position Sensorless Permanent-Magnet Synchronous Motor". Fig. 12 is a block diagram for illustrating the configuration of the present third embodiment. This simplified speed control system in the third embodiment includes the following configuration components: The speed-instruction generation unit 1 for providing the speed instruction $\omega_1$* to the PM motor 8, the $i_d$* generation unit 4 for generating the d-axis current instruction value $i_d$*, an adder 192 for outputting the rotational angular velocity $\omega_1$ by performing an addition of $\omega_1$* and an electric-angular-velocity deviation estimation value $\Delta\omega_1$ outputted by the PLL controller 13, a first-order delay filter 191 for applying a filter processing to the d-axis current detection value $i_{dc}$, and outputting the q-axis current instruction value $i_q$*, a voltage-instruction generation unit 190 for inputting $i_d$*, $i_q$*, and $\omega_1$*, and outputting the $d_c$-axis voltage instruction value $v_{dc}$* and the $q_c$-axis voltage instruction value $v_{qc}$* to the d-q-coordinates inverse transformation unit 6, the axis-error estimation unit 12 for calculating the axis error $\Delta\theta$ by inputting $v_{dc}$*, $v_{qc}$*, $i_{dc}$, $i_{qc}$, and $\omega_1$*, and taking advantage of (Expression 28), (Expression 29), or (Expression 30), and the parameter $K_4$ for representing the magnitude of the q-axis inductance value of the PM motor 8, the parameter $K_5$ for representing the cross-coupling degree of the q-axis inductance of the PM motor 8 from the d-axis current, the parameter $K_6$ for representing the saturation degree of the q-axis inductance of the PM motor 8 relative to the q-axis current, the parameter $I_0$ for representing the current for minimizing the cross-coupling degree of the q-axis inductance from the d-axis current, these parameters being inputted from the parameter setting unit 14, and the armature's winding resistance R of the PM motor 8, the PLL controller 13 for outputting $\Delta\omega_1$ by making the proportional calculation with respect to $\Delta\theta$, and performing the control for making $\Delta\theta$ smaller, the integrator 15 for integrating $\omega_1$ outputted by the adder 192, and outputting the electric angle $\theta_{dc}$ of the voltage applied to the PM motor 8 by the PWM inverter 7, the d-q-coordinates inverse transformation unit 6 for converting $v_{dc}$* and $v_{qc}$* to the three-phase AC voltage instructions $V_u$*, $V_v$*, and $V_w$* by taking advantage of the electric angle $\theta_{dc}$, the PWM inverter 7 for generating the three-phase AC voltages on the basis of the three-phase AC voltage instructions $V_u$*, $V_v$*, and $V_w$*, the current detector 10 for detecting the U-phase current $i_u$ outputted by the PWM inverter 7, the current detector 9 for detecting the W-phase current $i_w$ outputted by the PWM inverter 7, and the d-q-coordinates transformation unit 11 for taking advantage of the electric angle $\theta_{dc}$, and thereby coordinate-transforming the detected currents $i_u$ and $i_w$ to the components $i_{dc}$ and $i_{qc}$ on the respective $d_c$ axis and $q_c$ axis that are orthogonal to each other on the rotation coordinate system of the PM motor 8. Also, the internal configuration of the axis-error estimation unit 12 in the present third embodiment is the same as the one in the case of the first embodiment described earlier.

Next, referring to a block-line diagram illustrated in Fig. 13, the explanation will be given below concerning the configuration of the voltage-instruction generation unit 190. In Fig. 13, $i_d$* denotes the d-axis current instruction value, $i_q$* denotes the q-axis current instruction value, $v_{dc}$* denotes the $d_c$-axis voltage instruction value, and $v_{qc}$* denotes the $q_c$-axis voltage instruction value. A gain 200 and a gain 202 respectively output values obtained by multiplying $i_d$* and $i_q$* by the armature's winding resistance R of the PM motor 8, then inputting these respective values into a subtractor 201 for outputting $v_{dc}$* and an adder 203 for outputting $v_{qc}$*, respectively. This process allows generation of $v_{dc}$* and $v_{qc}$* where the voltage drop due to the armature's winding resistance R of the PM motor 8 is compensated.

Furthermore, at the time of generating the $d_c$-axis voltage instruction value $v_{dc}$*, in a gain 204, the q-axis magnetic flux $\Phi_q$ is calculated by multiplying $i_q$* by $L_q$. Also, in a multiplier 207, a speed induction voltage $\Phi_q\omega_1$*, which is generated by the q-axis magnetic flux $\Phi_q$ into the d-axis direction, is calculated by multiplying $\Phi_q$ by $\omega_1$*. In the subtractor 201, the $d_c$-axis voltage instruction value $v_{dc}$* is outputted which is obtained by subtracting $\Phi_q\omega_1$* from the output of the gain 200. This process makes it possible to compensate the q-axis magnetic flux $\Phi_q$-originated speed induction voltage $\Phi_q\omega_1$*, which is caused to occur in the d-axis direction inside the PM motor 8. The process is basically the same at the time of generating the $q_c$-axis voltage instruction value $v_{qc}$* as well. Namely, in a gain 205, a d-axis current magnetic flux $\Phi_{id}$ is calculated by multiplying $i_d$* by $L_d$. Then, in an adder 206, the d-axis magnetic flux $\Phi_d$ is calculated by adding the permanent-magnet magnetic flux $\Phi_m$ in the d-axis direction to the d-axis current magnetic flux $\Phi_d$. Next, in a multiplier 208, a speed induction voltage $\Phi_d\omega_1$*, which is generated by the d-axis magnetic flux $\Phi_d$ into a direction opposite to the q-axis direction, is calculated by multiplying $\Phi_d$ by $\omega_1$*. Moreover, in the adder 203, the $q_c$-axis voltage instruction value $v_{qc}$* is outputted which is obtained by adding $\Phi_d\omega_1$* to the output of the gain 202. This process makes it possible to compensate the d-axis magnetic flux $\Phi_d$-originated speed induction voltage $\Phi_d\omega_1$*, which is caused to occur in the direction opposite to the q-axis direction inside the PM motor 8.

According to the present third embodiment, it is impossible to implement the control response which is as satisfying as the control response implemented by the first embodiment. According to the third embodiment, however, it becomes possible to implement the high-accuracy magnetic-pole position estimation-based position/speed sensorless control without making the gain adjustment of the speed controller and the current controller, and with respect to the PM synchronous motor as well. Here, in the PM synchronous motor, the magnetic-flux saturation is conspicuous, and there exist the large number of inter-axes cross-coupling magnetic fluxes.

[Embodiment 4]

Fig. 14 is a diagram for illustrating a fourth embodiment where the torque control system in the second embodiment described already is applied to a railroad-vehicle driving apparatus. In the present fourth embodiment, a DC current, which is received from a cable 212 via a pantograph 213, is inputted into the PWM inverter 7 via a current-receiving filter 211. The current-receiving filter 211, which is equipped with a filter reactor 211a and a filter capacitor 211b, smoothes a ripple current from the PWM inverter 7. A master-mains controller 505 converts a notch operation of the driver into the torque instruction $\tau^*$, then inputting the torque instruction $\tau^*$ into the torque control system in the second embodiment. Based on the assistance by the torque control system, the PM motor 8 generates a torque which is substantially equal to the torque instruction $\tau^*$, thereby driving wheels 214 on a rail 215 via a not-illustrated gear.

[Embodiment 5]

Fig. 15 is a diagram for illustrating a fifth embodiment where the torque control system in the second embodiment described earlier is applied to a rear-wheel-driving electric automobile. In the present fifth embodiment, a DC voltage from a secondary battery 231 is inputted into the PWM inverter 7. A control unit (CU) 230 inputs, into the torque control system in the second embodiment, the torque instruction $\tau^*$ in response to a depressing amount of a not-illustrated accelerator pedal. Based on the assistance by the torque control system, the PM motor 8 generates a torque which is substantially equal to the torque instruction $\tau^*$, thereby driving a right rear-wheel 228 and a left rear-wheel 229 via a motor shaft 220, a clutch 221, a clutch-output shaft 222, a differential gear 223, and a rear-wheel axel shaft 224.

[Embodiment 6]

Fig. 7 is a diagram for illustrating a sixth embodiment where a convergence calculation processing for the axis error $\Delta\theta$ is introduced into the axis-error estimation unit 12 in the first to fifth embodiments described so far. Fig. 7 is the block diagram for illustrating the configuration of the axis-error estimation unit 12 in the present sixth embodiment. Fig. 7 differs from Fig. 6 in a point that a convergence judgment unit 102 and an execution/halt processing for a dashed-line inside processing are added to the configuration in Fig. 6. When an ACT_call signal, which is inputted into an ACT input terminal 103 by the convergence judgment unit 102, is equal to 1, the dashed-line inside processing falls into the execution state. Meanwhile, when the ACT_call signal is equal to 0, the dashed-line inside processing falls into the halt state. Also, in the block diagram illustrated in Fig. 7, the execution period Tse of the dashed-line inside processing is set at a value which is shorter as compared with the sample period Ts of the zero-order holders 50, 51, 52, 53, and 54 (i.e., Tse < Ts). On account of this shorter setting, it becomes possible to set a small-error (i.e., small-time-delay) axis error $\Delta\theta$ into the right side of (Expression 28), (Expression 29), or (Expression 30), even if the axis error $\Delta\theta$ varies significantly during the longer sample period Ts. Accordingly, the execution of the dashed-line inside processing with the sample period Tse, and based on $v_{dc}^*$, $v_{qc}^*$, $i_{dc}$, $i_{qc}$, and $\omega_1$ sample-held with the sample period Ts allows the axis error $\Delta\theta$ to converge into a constant value gradually. Fig. 8 illustrates a manner in which the convergence at this time is developing.

In Fig. 8, waveforms 110, 111, 112, 113, 114, 115, and 116 denote $v_{qc}^*$, $v_{dc}^*$, $i_{qc}$, $i_{dc}$, $\omega_1$, $\Delta\theta$, and the ACT_call, respectively. Also, the range of the entire transverse axis is set at the sample period Ts. On account of this setting, $v_{dc}^*$, $v_{qc}^*$, $i_{dc}$, $i_{qc}$, and $\omega_1$ have become equal to the constant values within the range illustrated in Fig. 8. In contrast thereto, the execution of the calculation of $\Delta\theta$ with the use of the sample period Tse gives rise to the result that, as shown in the waveform 115, $\Delta\theta$ converges into the constant value gradually. Moreover, the calculation of $\Delta\theta$ is halted at a point-in-time when the ACT_call outputted by the convergence judgment unit 102 changes from 1 to 0. Furthermore, the following (Expression 34) is used for the convergence judgment at this time: In (Expression 34), $\Delta\theta_{bk}$ denotes the calculation value before the sample period Tse, and $\varepsilon$ denotes a sufficiently small positive value which becomes the criterion for the convergence judgment.
[Expression 34]

$$\left|\frac{\Delta\theta - \Delta\theta_{bk}}{\Delta\theta}\right| \leq \varepsilon \quad \ldots \text{(Expression 34)}$$

The employment of the axis error $\Delta\theta$ based on the convergence calculation like the present sixth embodiment makes it possible to reduce the axis-error estimated error even further. Consequently, it becomes possible to implement the high-accuracy and high-response position/speed sensorless control with respect to the PM synchronous motor as well. Here, in the PM synchronous motor, the magnetic-flux saturation is conspicuous, and there exist the large number of inter-axes cross-coupling magnetic fluxes.

The above embodiments of the invention as well as the appended claims and figures show multiple characterizing features of the invention in specific combinations. The skilled person will easily be able to consider further combinations or sub-combinations of these features in order to adapt the invention as defined in the in the claims to his specific needs.

## Claims

1. A synchronous-motor control apparatus, comprising:

   estimation means (12) for estimating magnetic-pole position of a rotor,
   said synchronous-motor control apparatus
   separating a motor-current detection value into a d-axis current detection value and a q-axis current detection value on d-q-axes orthogonal rotation coordinate axes, said coordinate axes rotating in synchronization with an estimated magnetic-pole position outputted by said magnetic-pole position estimation means, and
   generating a voltage instruction value $v_{dc}^*$ and a voltage instruction value $v_{qc}^*$ for a power converter independently of each other, said voltage instruction values being defined on said coordinate axes,
   **characterized in that**
   when letting
   said d-axis current detection value be $i_{dc}$,
   said q-axis current detection value be $i_{qc}$,
   said parameters for representing said motor characteristics be a parameter $K_4$ for representing magnitude of a q-axis inductance value of said motor which is to be employed as said control target, a parameter $K_5$ for representing a cross-coupling degree of said q-axis inductance from said d-axis current, a parameter $K_6$ for representing a saturation degree of said q-axis inductance relative to said q-axis current, and a parameter $I_0$ for representing a current for minimizing said cross-coupling degree of said q-axis inductance from said d-axis current, and
   an axis-error estimation value be $\Delta\theta$,
   a q-axis inductance component $L_q$ ($i_{dc}$, $i_{qc}$, $\Delta\theta$) of said motor used in said magnetic-pole position estimation means is calculated using the following expression:

$$L_q\left(i_{dc}, i_{qc}, \Delta\theta\right) = \frac{K_4}{1 + K_5\left|i_{dc}\cos\Delta\theta - i_{qc}\sin\Delta\theta + I_0\right| + K_6\left|i_{dc}\sin\Delta\theta + i_{qc}\cos\Delta\theta\right|} \quad \ldots \text{(Expression 1)}$$

2. The synchronous-motor control apparatus according to Claim 1, wherein
   a fraction expression is used as an approximation expression for a q-axis inductance component of said motor used in said magnetic-pole position estimation means,
   numerator of said fraction expression being constituted with a constant which is specific to said motor, and denominator thereof being constituted with a summation of a first-degree expression of said q-axis current and a first-degree expression of said d-axis current.

3. The synchronous-motor control apparatus according to Claim 2, wherein
   said parameters to be set into said fraction expression are determined as being a parameter $K_4$ for representing magnitude of said q-axis inductance value of said motor which is to be employed as a control target, a parameter $K_5$ for representing a cross-coupling degree of said q-axis inductance from said d-axis current, a parameter $K_6$ for representing a saturation degree of said q-axis inductance relative to said q-axis current, and a parameter $I_0$ for representing a current for minimizing said cross-coupling degree of said q-axis inductance from said d-axis current.

4. The synchronous-motor control apparatus according to Claim 1, wherein,
   when letting
   said d-axis current detection value be $i_{dc}$,
   said q-axis current detection value be $i_{qc}$,
   said $d_c$-axis voltage instruction value be $v_{dc}^*$,
   said $q_c$-axis voltage instruction value be $v_{qc}^*$,
   parameters for representing a q-axis inductance of said motor be a parameter $K_4$ for representing magnitude of a q-axis inductance value of said motor which is to be employed as said control target, a parameter $K_5$ for representing a cross-coupling degree of said q-axis inductance from said d-axis current, a parameter $K_6$ for representing a saturation degree of said q-axis inductance relative to said q-axis current, and a parameter $I_0$ for representing a current for minimizing said cross-coupling degree of said q-axis inductance from said d-axis current,
an armature's winding resistance of said motor be R,
an axis-error estimation value be $\Delta\theta$, and
an electric angular velocity of said power converter be $\omega_1$,
$\Delta\theta$ is calculated using the following epression:

$$\Delta\theta = \tan^{-1}\left[\frac{v_{dc}^{*} - Ri_{dc} + \left(\dfrac{\omega_1 K_4 i_{qc}}{1 + K_5\left|i_{dc}\cos\Delta\theta - i_{qc}\sin\Delta\theta + I_0\right| + K_6\left|i_{dc}\sin\Delta\theta + i_{qc}\cos\Delta\theta\right|}\right)}{v_{qc}^{*} - Ri_{qc} - \left(\dfrac{\omega_1 K_4 i_{dc}}{1 + K_5\left|i_{dc}\cos\Delta\theta - i_{qc}\sin\Delta\theta + I_0\right| + K_6\left|i_{dc}\sin\Delta\theta + i_{qc}\cos\Delta\theta\right|}\right)}\right]$$

... (Expression 4)

**5.** The synchronous-motor control apparatus according to Claim 1, wherein,
when letting
said d-axis current detection value be $i_{dc}$,
said q-axis current detection value be $i_{qc}$,
said $d_c$-axis voltage instruction value be $v_{dc}^*$,
said $q_c$-axis voltage instruction value be $v_{qc}^*$,
parameters for representing a q-axis inductance of said motor be a parameter $K_4$ for representing magnitude of a q-axis inductance value of said motor which is to be employed as said control target, a parameter $K_5$ for representing a cross-coupling degree of said q-axis inductance from said d-axis current, a parameter $K_6$ for representing a saturation degree of said q-axis inductance relative to said q-axis current, and a parameter $I_0$ for representing a current for minimizing said cross-coupling degree of said q-axis inductance from said d-axis current,
an armature's winding resistance of said motor be R,
an axis-error estimation value be $\Delta\theta$, and
an electric angular velocity of said power converter be $\omega_1$,
$\Delta\theta$ is calculated using the following expression:

$$\Delta\theta = \tan^{-1}\left[\frac{v_{dc}^{*} - Ri_{dc} + \left(\dfrac{\omega_1 K_4 i_{qc}}{1 + K_5\left|i_{dc} - i_{qc}\Delta\theta + I_0\right| + K_6\left|i_{dc}\Delta\theta + i_{qc}\right|}\right)}{v_{qc}^{*} - Ri_{qc} - \left(\dfrac{\omega_1 K_4 i_{dc}}{1 + K_5\left|i_{dc} - i_{qc}\Delta\theta + I_0\right| + K_6\left|i_{dc}\Delta\theta + i_{qc}\right|}\right)}\right]$$

... (Expression 5)

**6.** The synchronous-motor control apparatus according to Claim 1, wherein,
when letting
said d-axis current detection value be $i_{dc}$,
said q-axis current detection value be $i_{qc}$,
said $d_c$-axis voltage instruction value be $v_{dc}^*$,
said $q_c$-axis voltage instruction value be $v_{qc}^*$,
parameters for representing a q-axis inductance of said motor be a parameter $K_4$ for representing magnitude of a q-axis inductance value of said motor which is to be employed as said control target, a parameter $K_5$ for representing a cross-coupling degree of said q-axis inductance from said d-axis current, a parameter $K_6$ for representing a saturation degree of said q-axis inductance relative to said q-axis current, and a parameter $I_0$ for representing a current for minimizing said cross-coupling degree of said q-axis inductance from said d-axis current,
an armature's winding resistance of said motor be R,
an axis-error estimation value be $\Delta\theta$, and
an electric angular velocity of said power converter be $\omega_1$,

$\Delta\theta$ is calculated using the following expression 6:

$$\Delta\theta = \tan^{-1}\left[\frac{v_{dc}^{*} - Ri_{dc} + \left(\frac{\omega_1 K_4 i_{qc}}{1 + K_5\left|i_{dc} + I_0\right| + K_6\left|i_{qc}\right|}\right)}{v_{qc}^{*} - Ri_{qc} - \left(\frac{\omega_1 K_4 i_{dc}}{1 + K_5\left|i_{dc} + I_0\right| + K_6\left|i_{qc}\right|}\right)}\right] \quad \ldots \text{(Expression 6)}$$

**7.** The synchronous-motor control apparatus according to Claim 1, 4 or 5, wherein said previous calculation value $\Delta\theta$ acquired using (Expression 4) or (Expression 5) is substituted into said axis-error estimation value $\Delta\theta$ used in said right-side calculation of (Expression 1), (Expression 2), (Expression 4), or (Expression 5).

**8.** The synchronous-motor control apparatus according to Claim 6 or 7, wherein a convergence calculation is performed in performing said calculation of (Expression 4) or (Expression 5), said convergence calculation being a calculation where said calculation value $\Delta\theta$ is repeatedly substituted into said right side of (Expression 4) or (Expression 5), said calculation value $\Delta\theta$ being acquired using said d-axis current detection value $i_{dc}$, said q-axis current detection value $i_{qc}$, said $d_c$-axis voltage instruction value $v_{dc}^*$, said $q_c$-axis voltage instruction value $v_{qc}^*$, and said electric angular velocity $\omega_1$ of said power converter, all of which remain the same by being fixed based on a zero-order hold processing.

**Patentansprüche**

**1.** Synchronmotor-Regelvorrichtung, die eine Schätzeinrichtung (12) zum Schätzen der Magnetpolposition eines Rotors aufweist,
wobei die Synchronmotor-Regelvorrichtung
einen Erfassungswert des Motorstroms in einen d-Achsen-Stromerfassungswert und einen q-Achsen-Stromerfassungswert auf orthogonalen rotierenden d-q-Koordinaten-Achsen auftrennt, wobei die Koordinaten-Achsen in Synchronisation mit einer geschätzten Magnetpolposition rotieren, die durch die Magnetpolpositions-Schätzeinrichtung ausgegeben wird, und
einen Spannungs-Befehlswert $v_{dc}^*$ und einen Spannungs-Befehlswert $v_{qc}^*$ für einen Stromrichter unabhängig voneinander erzeugt, wobei die Spannungs-Befehlswerte auf den genannten Koordinatenachsen definiert sind,
**dadurch gekennzeichnet, dass**,
wenn angenommen werden:

der d-Achsen-Stromerfassungswert als $i_{dc}$,
der q-Achsen-Stromerfassungswert als $i_{qc}$,
die Parameter zur Darstellung der Motorcharakteristiken als ein Parameter $K_4$ zur Darstellung der Größe eines q-Achsen-Induktanz-Wertes des Motors, der als Regelungs-Zielwert zu verwenden ist, ein Parameter $K_5$ zur Darstellung eines Kreuzkopplungsgrades der q-Achsen-Induktanz aus dem d-Achsen-Strom, ein Parameter $K_6$ zur Darstellung eines Sättigungsgrades der q-Achsen-Induktanz in Bezug auf den q-Achsen-Strom und ein Parameter $I_0$ zur Darstellung eines Stroms zur Minimierung des Kreuzkopplungsgrades der q-Achsen-Induktanz aus dem d-Achsen-Strom,
und
ein Achsen-Fehler-Schätzwert als $\Delta\theta$,
eine q-Achsen-Induktanzkomponente als $L_q$ ($i_{dc}$, $i_{qc}$, $\Delta\theta$) des Motors, die in der Magnetpolpositions- Schätzeinrichtung verwendet wird, unter Anwendung des folgenden Ausdrucks berechnet wird:

$$L_q(i_{dc}, i_{qc}, \Delta\theta) = \frac{K_4}{1 + K_5\left|i_{dc}\cos\Delta\theta - i_{qc}\sin\Delta\theta + I_0\right| + K_6\left|i_{dc}\sin\Delta\theta + i_{qc}\cos\Delta\theta\right|}$$

(Ausdruck 1).

**2.** Synchronmotor-Regelvorrichtung nach Anspruch 1, bei der ein Bruch-Ausdruck als Näherungsausdruck für eine q-Achsen-Induktanz-Komponente des Motors verwendet wird, die in der Magnetpolpositions- Schätzeinrichtung verwendet wird, wobei der Zähler des Bruch-Ausdrucks durch eine Konstante gebildet wird, die für den Motor typisch ist, und der Nenner des Bruchausdrucks durch eine Summierung eines Ausdrucks erster Ordnung des q-Achsen-Stroms und eines Ausdrucks erster Ordnung des d-Achsen-Stroms gebildet wird.

**3.** Synchronmotor-Regelvorrichtung nach Anspruch 2, bei der die in den Bruch-Ausdruck einzusetzenden Parameter festgelegt werden als ein Parameter $K_4$ zur Darstellung der Größe des q-Achsen-Induktanz-Wertes des Motors, der als Regelungs-Zielwert zu verwenden ist, ein Parameter $K_5$ zur Darstellung eines Kreuzkopplungsgrades der q-Achsen-Induktanz aus dem d-Achsen-Strom, ein Parameter $K_6$ zur Darstellung eines Sättigungsgrades der q-Achsen-Induktanz in Bezug auf den q-Achsen-Strom und ein Parameter $I_0$ zur Darstellung eines Stroms zur Minimierung des Kreuzkopplungsgrades der q-Achsen-Induktanz aus dem d-Achsen-Strom.

**4.** Synchronmotor-Regelvorrichtung nach Anspruch 1, bei der, wenn angenommen werden:

der d-Achsen-Stromerfassungswert als $i_{dc}$,
der q-Achsen-Stromerfassungswert als $i_{qc}$,
der $d_c$-Achsen-Spannungs-Befehlswert als $v_{dc}^*$,
der $q_c$-Achsen-Spannungs-Befehlswert als $v_{qc}^*$,
Parameter zur Darstellung einer q-Achsen-Induktanz des Motors als ein Parameter $K_4$ zur Darstellung der Größe eines q-Achsen-Induktanz-Wertes des Motors, der als Regelungs-Zielwert zu verwenden ist, ein Parameter $K_5$ zur Darstellung eines Kreuzkopplungsgrades der q-Achsen-Induktanz aus dem d-Achsen-Strom, ein Parameter $K_6$ zur Darstellung eines Sättigungsgrades der q-Achsen-Induktanz in Bezug auf den q-Achsen-Strom und ein Parameter $I_0$ zur Darstellung eines Stroms zur Minimierung des Kreuzkopplungsgrades der q-Achsen-Induktanz aus dem d-Achsen-Strom,
ein Ankerwicklungs-Widerstand des Motors als R,
ein Achsen-Fehler-Schätzwert als $\Delta\theta$
und
eine elektrische Winkelgeschwindigkeit des Stromrichters als $\omega_1$,
$\Delta\theta$ unter Anwendung des folgenden Ausdrucks berechnet wird:

$$\Delta\theta = \tan^{-1}\left[\frac{v_{dc}^* - Ri_{dc} + \left(\frac{\omega_1 K_4 i_{qc}}{1 + K_5\left|i_{dc}\cos\Delta\theta - i_{qc}\sin\Delta\theta + I_0\right| + K_6\left|i_{dc}\sin\Delta\theta + i_{qc}\cos\Delta\theta\right|}\right)}{v_{qc}^* - Ri_{qc} - \left(\frac{\omega_1 K_4 i_{dc}}{1 + K_5\left|i_{dc}\cos\Delta\theta - i_{qc}\sin\Delta\theta + I_0\right| + K_6\left|i_{dc}\sin\Delta\theta + i_{qc}\cos\Delta\theta\right|}\right)}\right]$$

(Ausdruck 4).

**5.** Synchronmotor-Regelvorrichtung nach Anspruch 1, bei der, wenn angenommen werden:

der d-Achsen-Stromerfassungswert als $i_{dc}$,
der q-Achsen-Stromerfassungswert als $i_{qc}$,
der $d_c$-Achsen-Spannungs-Befehlswert als $v_{dc}^*$,
der $q_c$-Achsen-Spannungs-Befehlswert als $v_{qc}^*$,

Parameter zur Darstellung einer q-Achsen-Induktanz des Motors als ein Parameter $K_4$ zur Darstellung der Größe eines q-Achsen-Induktanz-Wertes des Motors, der als Regelungs-Zielwert zu verwenden ist, ein Parameter $K_5$ zur Darstellung eines Kreuzkopplungsgrades der q-Achsen-Induktanz aus dem d-Achsen-Strom, ein Parameter $K_6$ zur Darstellung eines Sättigungsgrades der q-Achsen-Induktanz in Bezug auf den q-Achsen-Strom und ein Parameter $I_0$ zur Darstellung eines Stroms zur Minimierung des Kreuzkopplungsgrades der q-Achsen-Induktanz aus dem d-Achsen-Strom,
ein Ankerwicklungs-Widerstand des Motors als R,
ein Achsen-Fehler-Schätzwert als $\Delta\theta$
und
eine elektrische Winkelgeschwindigkeit des Stromrichters als $\omega_1$,
$\Delta\theta$ unter Anwendung des folgenden Ausdrucks berechnet wird:

$$\Delta\theta = \tan^{-1}\left[\frac{v_{dc}^{*} - Ri_{dc} + \left(\dfrac{\omega_1 K_4 i_{qc}}{1+K_5\left|i_{dc} - i_{qc}\Delta\theta + I_0\right| + K_6\left|i_{dc}\Delta\theta + i_{qc}\right|}\right)}{v_{qc}^{*} - Ri_{qc} - \left(\dfrac{\omega_1 K_4 i_{dc}}{1+K_5\left|i_{dc} - i_{qc}\Delta\theta + I_0\right| + K_6\left|i_{dc}\Delta\theta + i_{qc}\right|}\right)}\right]$$

(Ausdruck 5).

**6.** Synchronmotor-Regelvorrichtung nach Anspruch 1, bei der, wenn angenommen werden:

der d-Achsen-Stromerfassungswert als $i_{dc}$,
der q-Achsen-Stromerfassungswert als $i_{qc}$,
der $d_c$-Achsen-Spannungs-Befehlswert als $v_{dc}^*$,
der $q_c$-Achsen-Spannungs-Befehlswert als $v_{qc}^*$,
Parameter zur Darstellung einer q-Achsen-Induktanz des Motors als ein Parameter $K_4$ zur Darstellung der Größe eines q-Achsen-Induktanz-Wertes des Motors, der als Regelungs-Zielwert zu verwenden ist, ein Parameter $K_5$ zur Darstellung eines Kreuzkopplungsgrades der q-Achsen-Induktanz aus dem d-Achsen-Strom, ein Parameter $K_6$ zur Darstellung eines Sättigungsgrades der q-Achsen-Induktanz in Bezug auf den q-Achsen-Strom und ein Parameter $I_0$ zur Darstellung eines Stroms zur Minimierung des Kreuzkopplungsgrades der q-Achsen-Induktanz aus dem d-Achsen-Strom,
ein Ankerwicklungs-Widerstand des Motors als R,
ein Achsen-Fehler-Schätzwert als $\Delta\theta$
und
eine elektrische Winkelgeschwindigkeit des Stromrichters als $\omega_1$,
$\Delta\theta$ unter Anwendung des folgenden Ausdrucks 6 berechnet wird:

$$\Delta\theta = \tan^{-1}\left[\frac{v_{dc}^{*} - Ri_{dc} + \left(\dfrac{\omega_1 K_4 i_{qc}}{1+K_5\left|i_{dc} + I_0\right| + K_6\left|i_{qc}\right|}\right)}{v_{qc}^{*} - Ri_{qc} - \left(\dfrac{\omega_1 K_4 i_{dc}}{1+K_5\left|i_{dc} + I_0\right| + K_6\left|i_{qc}\right|}\right)}\right]$$

(Ausdruck 6).

**7.** Synchronmotor-Regelvorrichtung nach Anspruch 1, 4 oder 5, bei welcher der vorherige berechnete Wert $\Delta\theta$, der unter Anwendung von Ausdruck 4 oder Ausdruck 5 gewonnen wurde, als

Achsen-Fehler-Schätzwert $\Delta\theta$ eingesetzt wird, der in der Berechnung auf der rechten Seite von Ausdruck 1, Ausdruck 2, Ausdruck 4 oder Ausdruck 5 verwendet ist.

**8.** Synchronmotor-Regelvorrichtung nach Anspruch 6 oder 7, bei der bei der Ausführung der Berechnung von Ausdruck 4 oder Ausdruck 5 eine Konvergenz-Berechnung durchgeführt wird, wobei die Konvergenz-Berechnung eine Berechnung ist, bei welcher der berechnete Wert $\Delta\theta$ wiederholt in die rechte Seite von Ausdruck 4 oder Ausdruck 5 eingesetzt wird,
wobei der berechnete Wert $\Delta\theta$ gewonnen wird unter Verwendung des d-Achsen-Stromerfassungswerts $i_{dc}$, des q-Achsen-Stromerfassungswerts $i_{qc}$, des $d_c$-Achsen-Spannungs-Befehlswerts $v_{dc}$*, des $q_c$-Achsen-Spannungs-Befehlswerts $v_{qc}$* und der elektrischen Winkelgeschwindigkeit $\omega_1$ des Stromrichters, die sämtlich gleich bleiben durch Festlegung auf der Basis einer Halteverarbeitung nullter Ordnung.

## Revendications

**1.** Appareil de commande de moteur synchrone, comprenant :

un moyen (12) d'estimation pour estimer une position de pôles magnétiques d'un rotor,
ledit appareil de commande de moteur synchrone
séparant une valeur de détection de courant de moteur en une valeur de détection de courant d'axe d et une valeur de détection de courant d'axe q sur des axes de coordonnées de rotation orthogonaux d'axes d-q, lesdits axes de coordonnées tournant en synchronisation avec une position de pôles magnétiques estimée délivrée en sortie par ledit moyen d'estimation de position de pôles magnétiques, et
générant une valeur d'instruction de tension $v_{dc}$* et une valeur d'instruction de tension $v_{qc}$* pour un convertisseur de puissance indépendamment l'une de l'autre, lesdites valeurs d'instruction de tension étant définies sur lesdits axes de coordonnées,
**caractérisé en ce que**
en supposant
ladite valeur de détection de courant d'axe d être $i_{dc}$,
ladite valeur de détection de courant d'axe q être $i_{qc}$,
lesdits paramètres pour représenter lesdites caractéristiques de moteur être un paramètre $K_4$ pour représenter une grandeur d'une valeur d'inductance d'axe q dudit moteur qui doit être employée comme ladite cible de commande, un paramètre $K_5$ pour représenter un degré de couplage croisé de ladite inductance d'axe q à partir dudit courant d'axe d, un paramètre $K_6$ pour représenter un degré de saturation de ladite inductance d'axe q par rapport audit courant d'axe q, et un paramètre $I_0$ pour représenter un courant pour minimiser ledit degré de couplage croisé de ladite inductance d'axe q à partir dudit courant d'axe d, et
une valeur d'estimation d'erreur d'axes être $\Delta\theta$,
une composante d'inductance d'axe q $L_q$ ($i_{dc}$, $i_{qc}$, $\Delta\theta$) dudit moteur utilisée dans ledit moyen d'estimation de position de pôles magnétiques est calculée en utilisant l'expression suivante :

$$L_q(i_{dc}, i_{qc}, \Delta\theta) = \frac{K_4}{1 + K_5 \left| i_{dc}\cos\Delta\theta - i_{qc}\sin\Delta\theta + I_0 \right| + K_6 \left| i_{dc}\sin\Delta\theta + i_{qc}\cos\Delta\theta \right|} \cdots$$

(Expression 1).

**2.** Appareil de commande de moteur synchrone selon la revendication 1, dans lequel
une expression de fraction est utilisée comme une expression d'approximation pour une composante d'inductance d'axe q dudit moteur utilisée dans ledit moyen d'estimation de position de pôles magnétiques,
le numérateur de ladite expression de fraction étant constitué avec une constante qui est spécifique audit moteur, et le dénominateur de celle-ci étant constitué avec une somme d'une expression de premier degré dudit courant d'axe q et d'une expression de premier degré dudit courant d'axe d.

**3.** Appareil de commande de moteur synchrone selon la revendication 2, dans lequel
lesdits paramètres devant être définis dans ladite expression de fraction sont déterminés comme étant un paramètre $K_4$ pour représenter une grandeur d'une valeur d'inductance d'axe q dudit moteur qui doit être employée comme une cible de commande, un paramètre $K_5$ pour représenter un degré de couplage croisé de ladite inductance d'axe q à partir dudit courant d'axe d, un paramètre $K_6$ pour représenter un degré de saturation de ladite inductance d'axe q par rapport audit courant d'axe q, et un paramètre $I_0$ pour représenter un courant pour minimiser ledit degré de couplage croisé de ladite inductance d'axe q à partir dudit courant d'axe d.

**4.** Appareil de commande de moteur synchrone selon la revendication 1, dans lequel en supposant
ladite valeur de détection de courant d'axe d être $i_{dc}$,
ladite valeur de détection de courant d'axe q être $i_{qc}$,
ladite valeur d'instruction de tension d'axe $d_c$ être $v_{dc}^*$,
ladite valeur d'instruction de tension d'axe $q_c$ être $v_{qc}^*$,
des paramètres pour représenter une inductance d'axe q dudit moteur être un paramètre $K_4$ pour représenter une grandeur d'une valeur d'inductance d'axe q dudit moteur qui doit être employée comme ladite cible de commande, un paramètre $K_5$ pour représenter un degré de couplage croisé de ladite inductance d'axe q à partir dudit courant d'axe d, un paramètre $K_6$ pour représenter un degré de saturation de ladite inductance d'axe q par rapport audit courant d'axe q, et un paramètre $I_0$ pour représenter un courant pour minimiser ledit degré de couplage croisé de ladite inductance d'axe q à partir dudit courant d'axe d,
une résistance d'enroulement d'induit dudit moteur être R,
une valeur d'estimation d'erreur d'axes être $\Delta\theta$, et
une vitesse angulaire électrique dudit convertisseur de puissance être $\omega_1$,
$\Delta\theta$ est calculée en utilisant l'expression suivante :

$$\Delta\theta = \tan^{-1}\left[\frac{v_{dc}^* - Ri_{dc} + \left(\dfrac{\omega_1 K_4 i_{qc}}{1 + K_5\left|i_{dc}\cos\Delta\theta - i_{qc}\sin\Delta\theta + I_0\right| + K_6\left|i_{dc}\sin\Delta\theta + i_{qc}\cos\Delta\theta\right|}\right)}{v_{qc}^* - Ri_{qc} - \left(\dfrac{\omega_1 K_4 i_{dc}}{1 + K_5\left|i_{dc}\cos\Delta\theta - i_{qc}\sin\Delta\theta + I_0\right| + K_6\left|i_{dc}\sin\Delta\theta + i_{qc}\cos\Delta\theta\right|}\right)}\right]$$

... (Expression 4).

**5.** Appareil de commande de moteur synchrone selon la revendication 1, dans lequel en supposant
ladite valeur de détection de courant d'axe d être $i_{dc}$,
ladite valeur de détection de courant d'axe q être $i_{qc}$,
ladite valeur d'instruction de tension d'axe $d_c$ être $v_{dc}^*$,
ladite valeur d'instruction de tension d'axe $q_c$ être $v_{qc}^*$,
des paramètres pour représenter une inductance d'axe q dudit moteur être un paramètre $K_4$ pour représenter une grandeur d'une valeur d'inductance d'axe q dudit moteur qui doit être employée comme ladite cible de commande, un paramètre $K_5$ pour représenter un degré de couplage croisé de ladite inductance d'axe q à partir dudit courant d'axe d, un paramètre $K_6$ pour représenter un degré de saturation de ladite inductance d'axe q par rapport audit courant d'axe q, et un paramètre $I_0$ pour représenter un courant pour minimiser ledit degré de couplage croisé de ladite inductance d'axe q à partir dudit courant d'axe d,
une résistance d'enroulement d'induit dudit moteur être R,
une valeur d'estimation d'erreur d'axes être $\Delta\theta$, et
une vitesse angulaire électrique dudit convertisseur de puissance être $\omega_1$,
$\Delta\theta$ est calculée en utilisant l'expression suivante :

$$\Delta\theta = \tan^{-1}\left[\frac{v_{dc}^{*} - Ri_{dc} + \left(\dfrac{\omega_1 K_4 i_{qc}}{1 + K_5\left|i_{dc} - i_{qc}\Delta\theta + I_0\right| + K_6\left|i_{dc}\Delta\theta + i_{qc}\right|}\right)}{v_{qc}^{*} - Ri_{qc} - \left(\dfrac{\omega_1 K_4 i_{dc}}{1 + K_5\left|i_{dc} - i_{qc}\Delta\theta + I_0\right| + K_6\left|i_{dc}\Delta\theta + i_{qc}\right|}\right)}\right]$$

... (Expression 5).

**6.** Appareil de commande de moteur synchrone selon la revendication 1, dans lequel en supposant
ladite valeur de détection de courant d'axe d être $i_{dc}$,
ladite valeur de détection de courant d'axe q être $i_{qc}$,
ladite valeur d'instruction de tension d'axe $d_c$ être $v_{dc}^*$,
ladite valeur d'instruction de tension d'axe $q_c$ être $v_{qc}^*$,
des paramètres pour représenter une inductance d'axe q dudit moteur être un paramètre $K_4$ pour représenter une grandeur d'une valeur d'inductance d'axe q dudit moteur qui doit être employée comme ladite cible de commande, un paramètre $K_5$ pour représenter un degré de couplage croisé de ladite inductance d'axe q à partir dudit courant d'axe d, un paramètre $K_6$ pour représenter un degré de saturation de ladite inductance d'axe q par rapport audit courant d'axe q, et un paramètre $I_0$ pour représenter un courant pour minimiser ledit degré de couplage croisé de ladite inductance d'axe q à partir dudit courant d'axe d,
une résistance d'enroulement d'induit dudit moteur être R,
une valeur d'estimation d'erreur d'axes être $\Delta\theta$, et
une vitesse angulaire électrique dudit convertisseur de puissance être $\omega_1$,
$\Delta\theta$ est calculée en utilisant l'expression 6 suivante :

$$\Delta\theta = \tan^{-1}\left[\frac{v_{dc}^{*} - Ri_{dc} + \left(\dfrac{\omega_1 K_4 i_{qc}}{1 + K_5\left|i_{dc} + I_0\right| + K_6\left|i_{qc}\right|}\right)}{v_{qc}^{*} - Ri_{qc} - \left(\dfrac{\omega_1 K_4 i_{dc}}{1 + K_5\left|i_{dc} + I_0\right| + K_6\left|i_{qc}\right|}\right)}\right]$$

... (Expression 6).

**7.** Appareil de commande de moteur synchrone selon la revendication 1, 4 ou 5, dans lequel ladite valeur de calcul précédente $\Delta\theta$ acquise en utilisant (Expression 4) ou (Expression 5) est substituée dans ladite valeur d'estimation d'erreur d'axes être $\Delta\theta$ utilisée dans ledit calcul de côté droit de (Expression 1), (Expression 2), (Expression 4), ou (Expression 5).

**8.** Appareil de commande de moteur synchrone selon la revendication 6 ou 7, dans lequel un calcul de convergence est effectué en effectuant ledit calcul de (Expression 4) ou (Expression 5), ledit calcul de convergence étant un calcul où ladite valeur de calcul $\Delta\theta$ est substituée de manière répétée dans ledit côté droit de (Expression 4) ou (Expression 5),
ladite valeur de calcul $\Delta\theta$ étant acquise en utilisant ladite valeur de détection de courant d'axe d $i_{dc}$, ladite valeur de détection de courant d'axe q $i_{qc}$, ladite valeur d'instruction de tension d'axe $d_c$ $v_{dc}^*$, ladite valeur d'instruction de tension d'axe $q_c$ $v_{qc}^*$, et ladite vitesse angulaire électrique $\omega_1$ dudit convertisseur de puissance, dont toutes restent les mêmes en étant fixées sur la base d'un traitement de maintien d'ordre zéro.

FIG.1

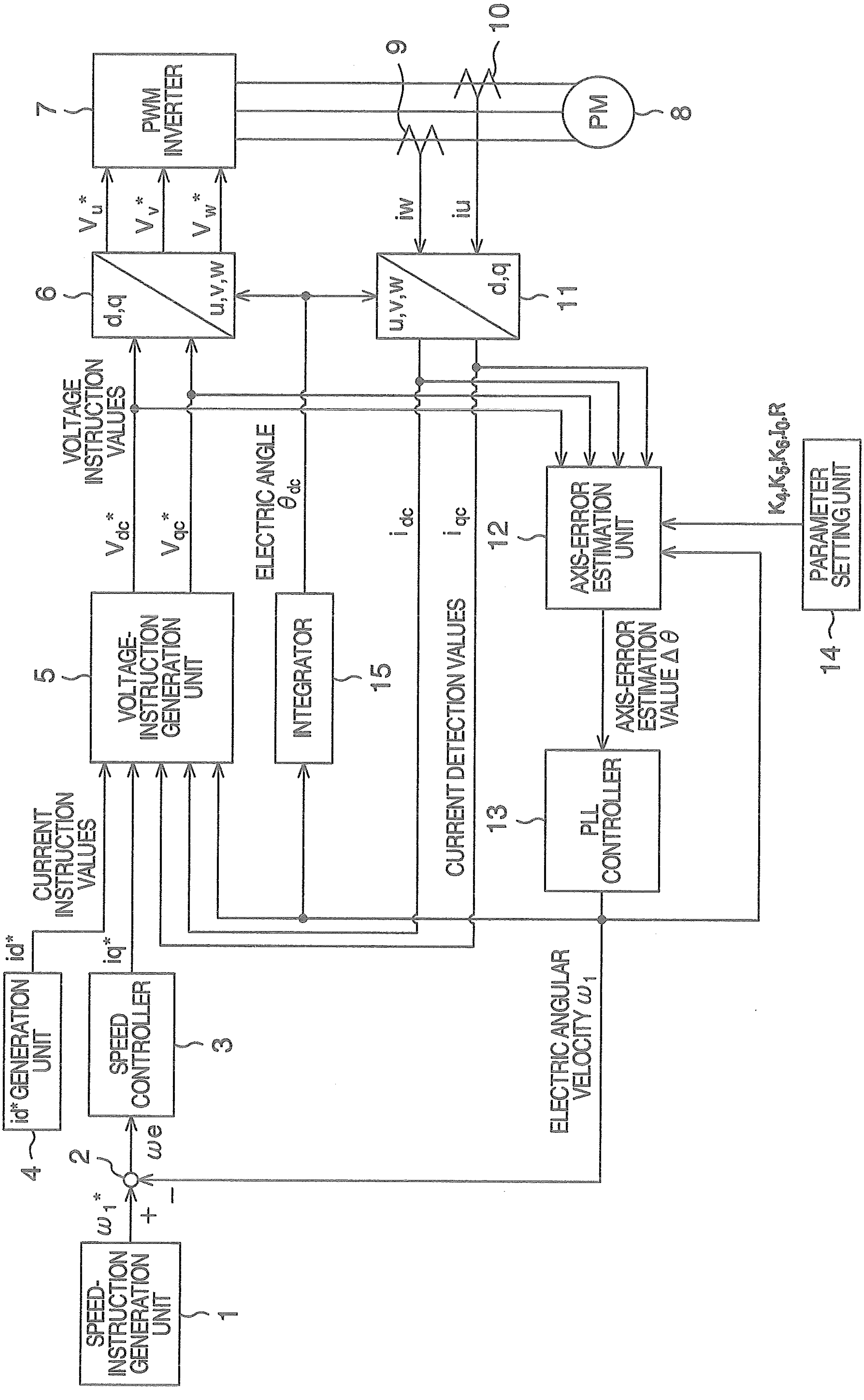
SPEED-INSTRUCTION GENERATION UNIT
1
$\omega_1$*
+
−
2
$\omega$e
SPEED CONTROLLER
3
id* GENERATION UNIT
4
id*
iq*
CURRENT INSTRUCTION VALUES
VOLTAGE-INSTRUCTION GENERATION UNIT
5
$V_{dc}$*
$V_{qc}$*
VOLTAGE INSTRUCTION VALUES
d,q
u, v, w
6
$V_u$*
$V_v$*
$V_w$*
PWM INVERTER
7
PM
8
9
10
iw
iu
u, v, w
d,q
11
INTEGRATOR
15
ELECTRIC ANGLE $\theta_{dc}$
$i_{dc}$
$i_{qc}$
CURRENT DETECTION VALUES
AXIS-ERROR ESTIMATION UNIT
12
AXIS-ERROR ESTIMATION VALUE $\Delta\theta$
PLL CONTROLLER
13
ELECTRIC ANGULAR VELOCITY $\omega_1$
PARAMETER SETTING UNIT
14
$K_4, K_5, K_6, I_0, R$

FIG.2A

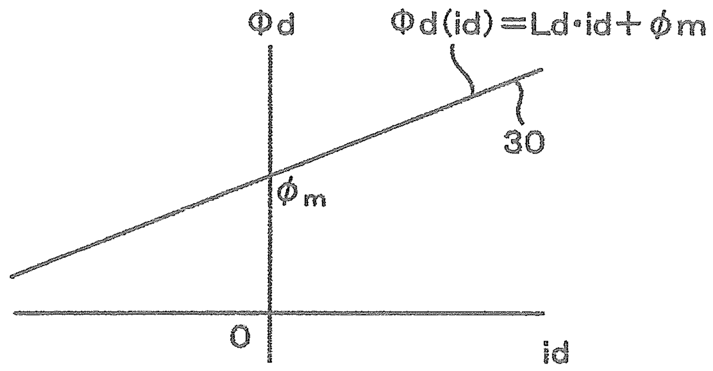


RELATIONSHIP BETWEEN d-AXIS CURRENT AND d-AXIS MAGNETIC FLUX

FIG.2B

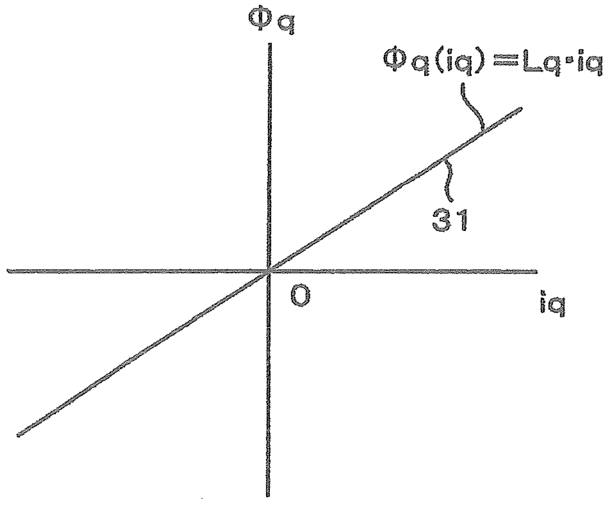


RELATIONSHIP BETWEEN q-AXIS CURRENT AND q-AXIS MAGNETIC FLUX

FIG.3A

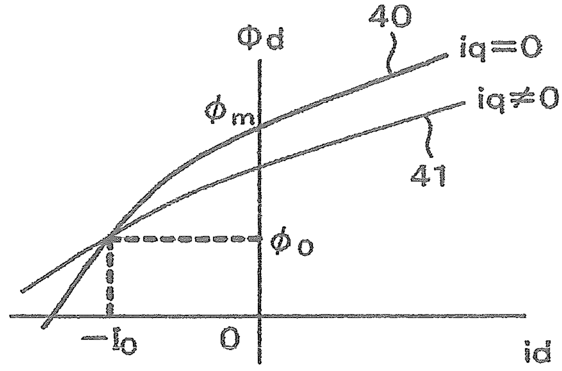


RELATIONSHIP BETWEEN d-AXIS CURRENT AND d-AXIS MAGNETIC FLUX

FIG.3B

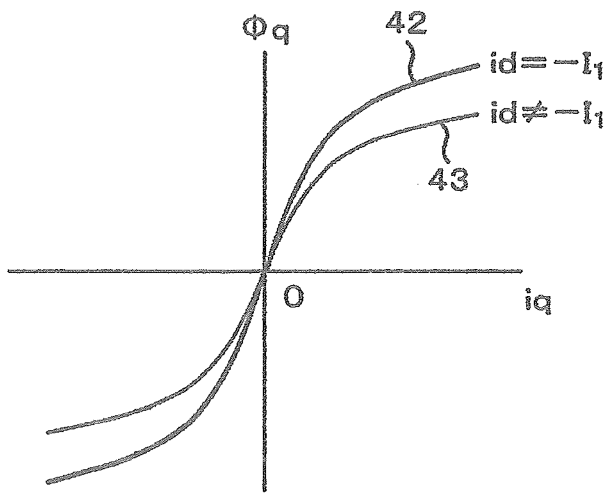


RELATIONSHIP BETWEEN q-AXIS CURRENT AND q-AXIS MAGNETIC FLUX

FIG.4

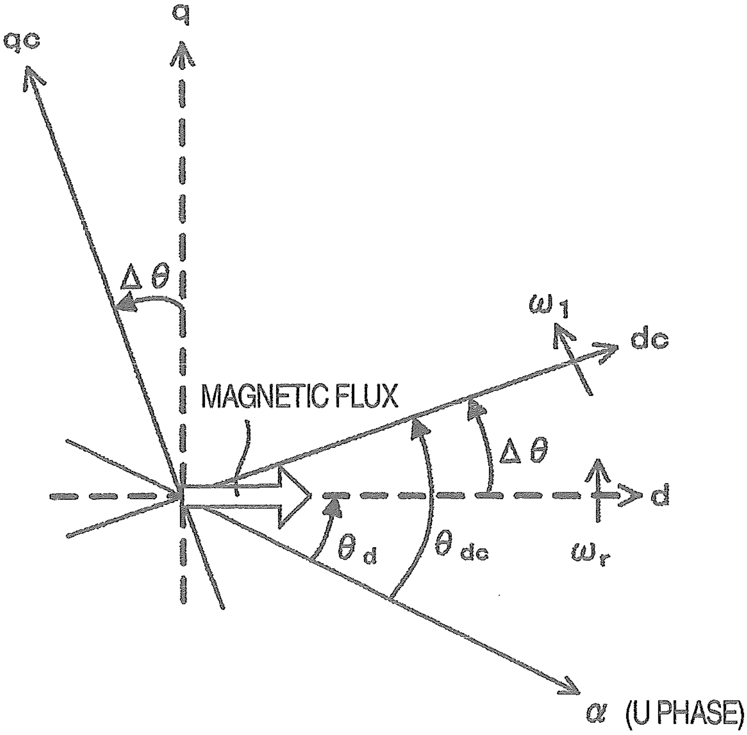

FIG.5A

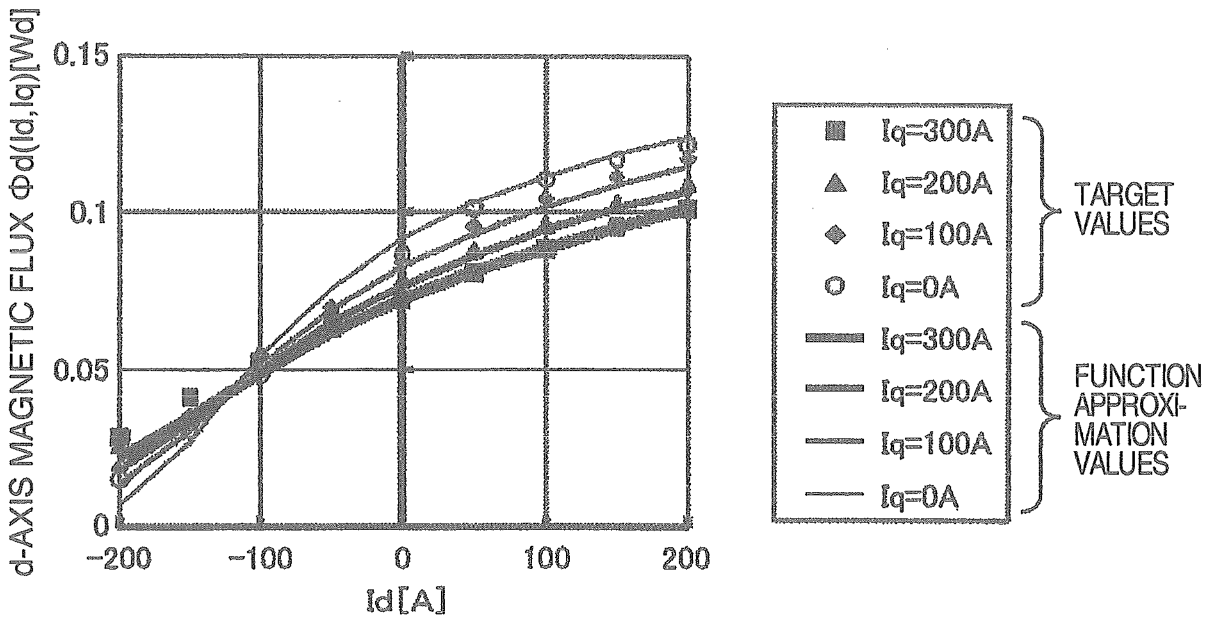


RELATIONSHIP BETWEEN d-AXIS CURRENT AND d-AXIS MAGNETIC FLUX

FIG.5B

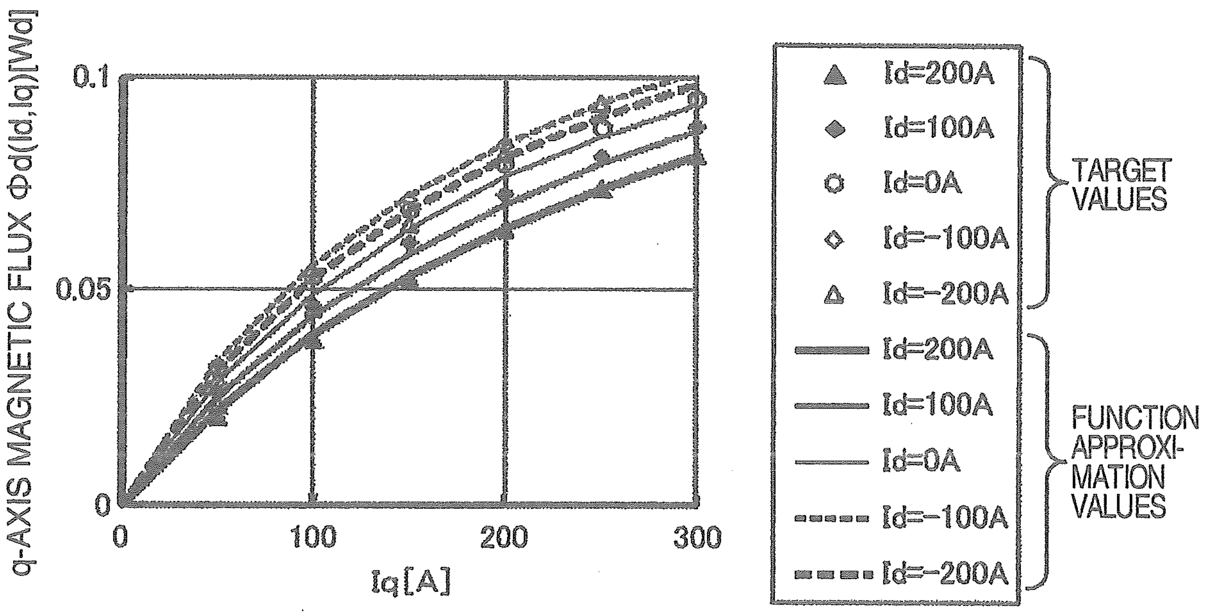


RELATIONSHIP BETWEEN q-AXIS CURRENT AND q-AXIS MAGNETIC FLUX

FIG.6

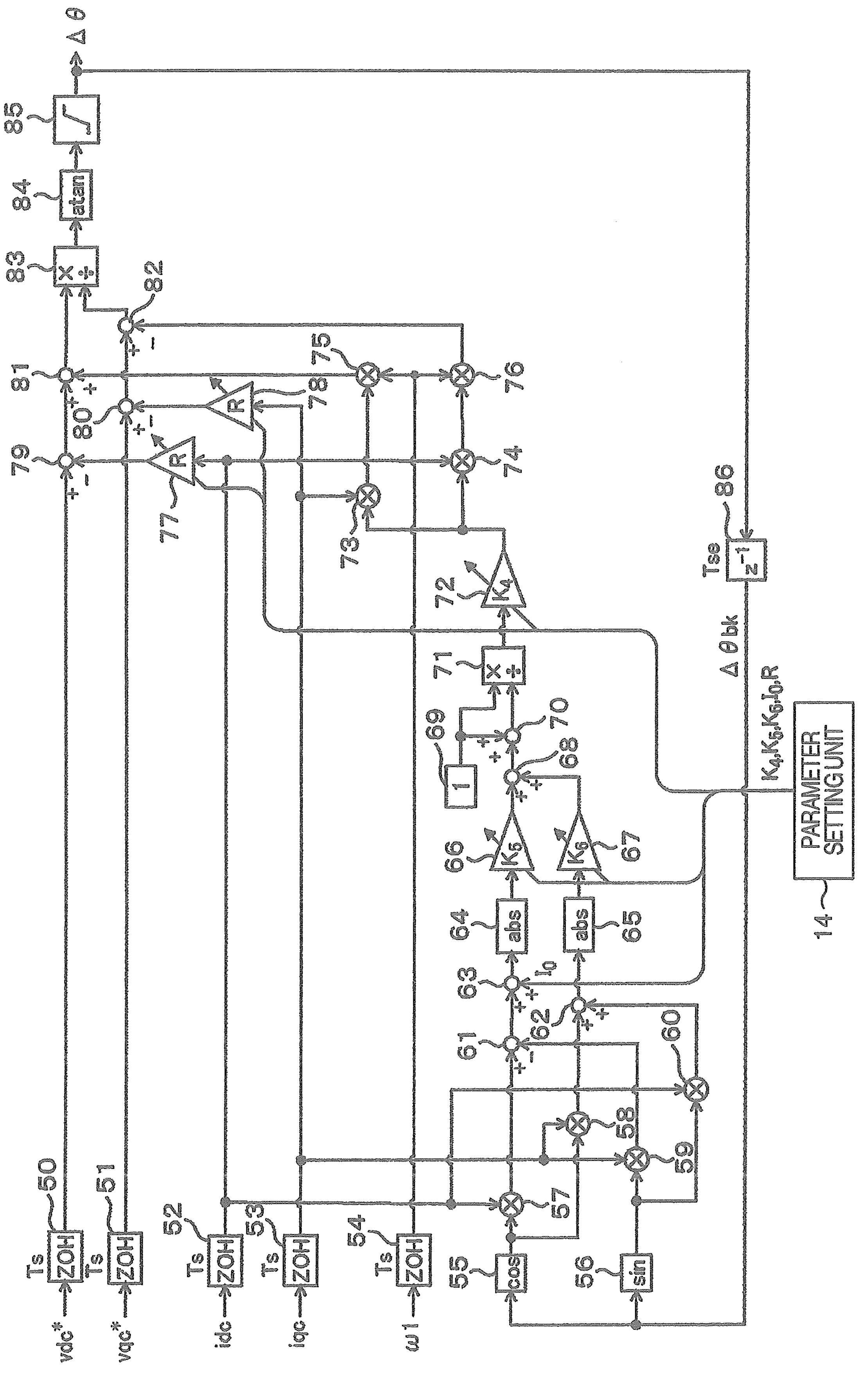
vdc*
vqc*
idc
iqc
ω1
Ts
ZOH
cos
sin
abs
K5
K6
K4
R
1
×
÷
atan
Δθ
Tse
z-1
Δθbk
K4,K5,K6,I0,R
PARAMETER SETTING UNIT
50
51
52
53
54
55
56
57
58
59
60
61
62
63
64
65
66
67
68
69
70
71
72
73
74
75
76
77
78
79
80
81
82
83
84
85
86
14

FIG.7

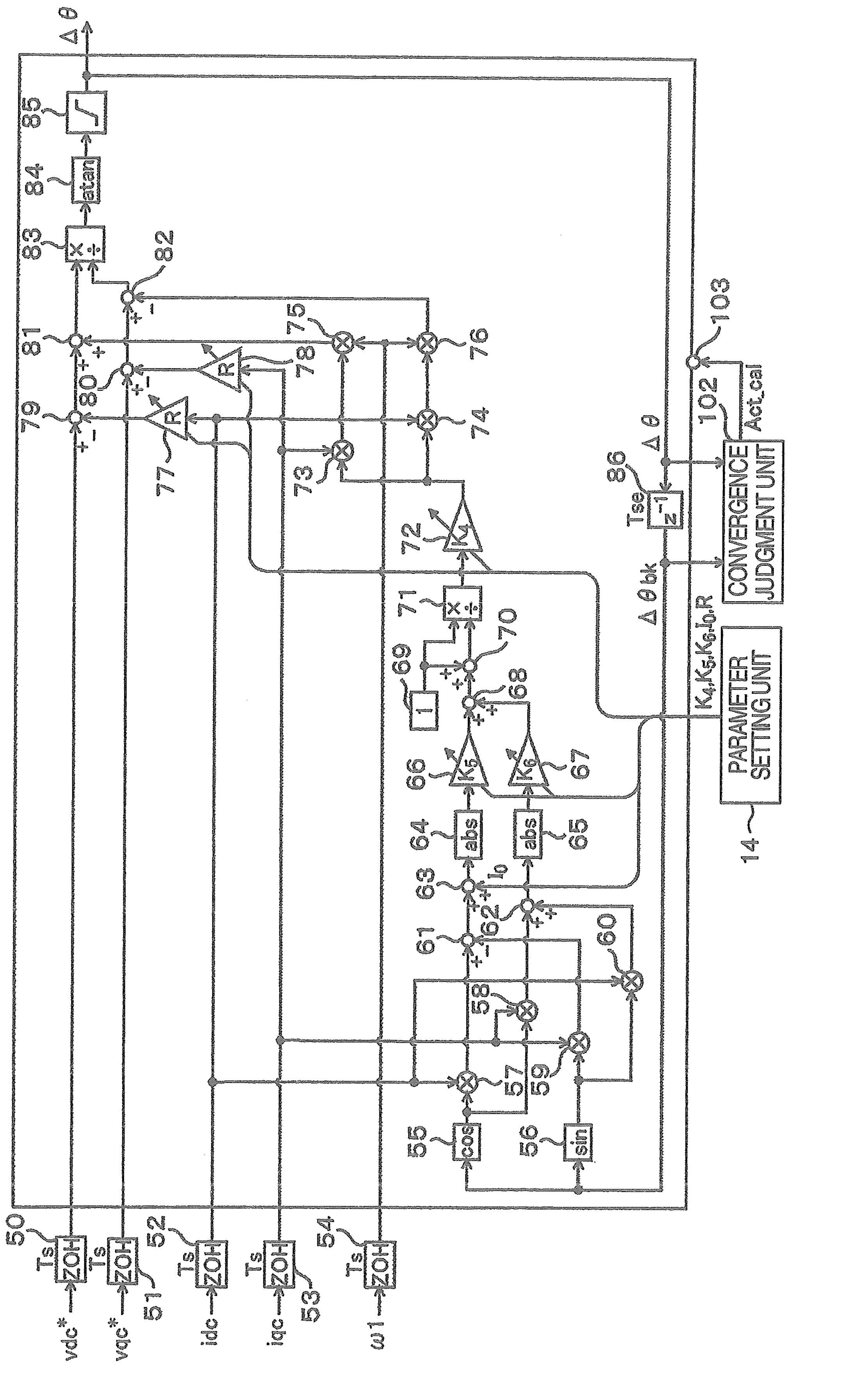
vdc*
vqc*
idc
iqc
ω1
Ts
ZOH
50
51
52
53
54
55
56
57
58
59
60
61
62
63
64
65
66
67
68
69
70
71
72
73
74
75
76
77
78
79
80
81
82
83
84
85
86
102
103
14
cos
sin
abs
$I_0$
$K_5$
$K_6$
$K_4$
1
R
atan
Δθ
Tse
$z^{-1}$
Δθbk
$K_4, K_5, K_6, I_0, R$
PARAMETER SETTING UNIT
CONVERGENCE JUDGMENT UNIT
Act_cal

FIG.8

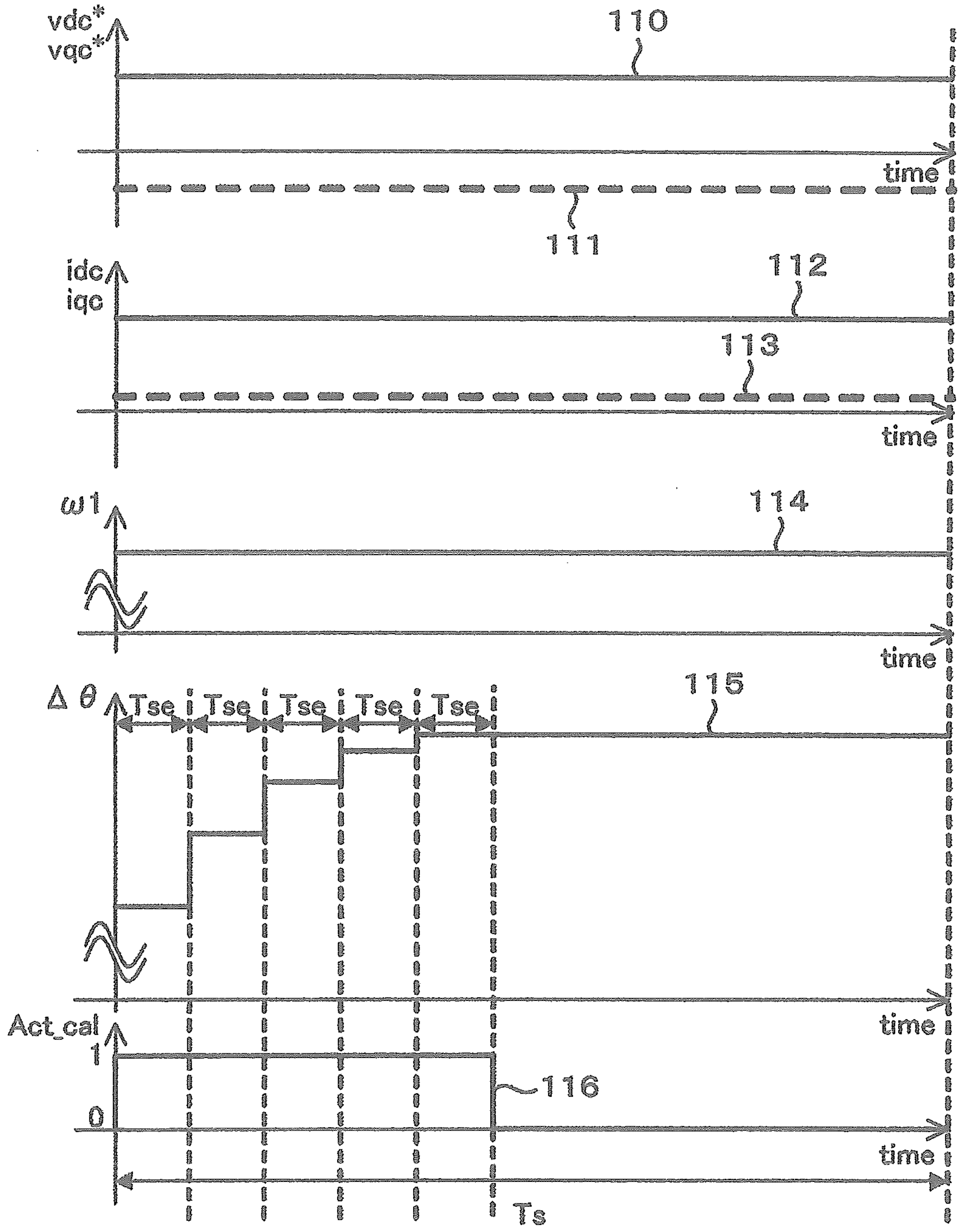
vdc*
vqc*
110
time
111
idc
iqc
112
113
time
ω1
114
time
Δ θ
Tse
Tse
Tse
Tse
Tse
115
time
Act_cal
1
0
116
time
Ts

FIG.9

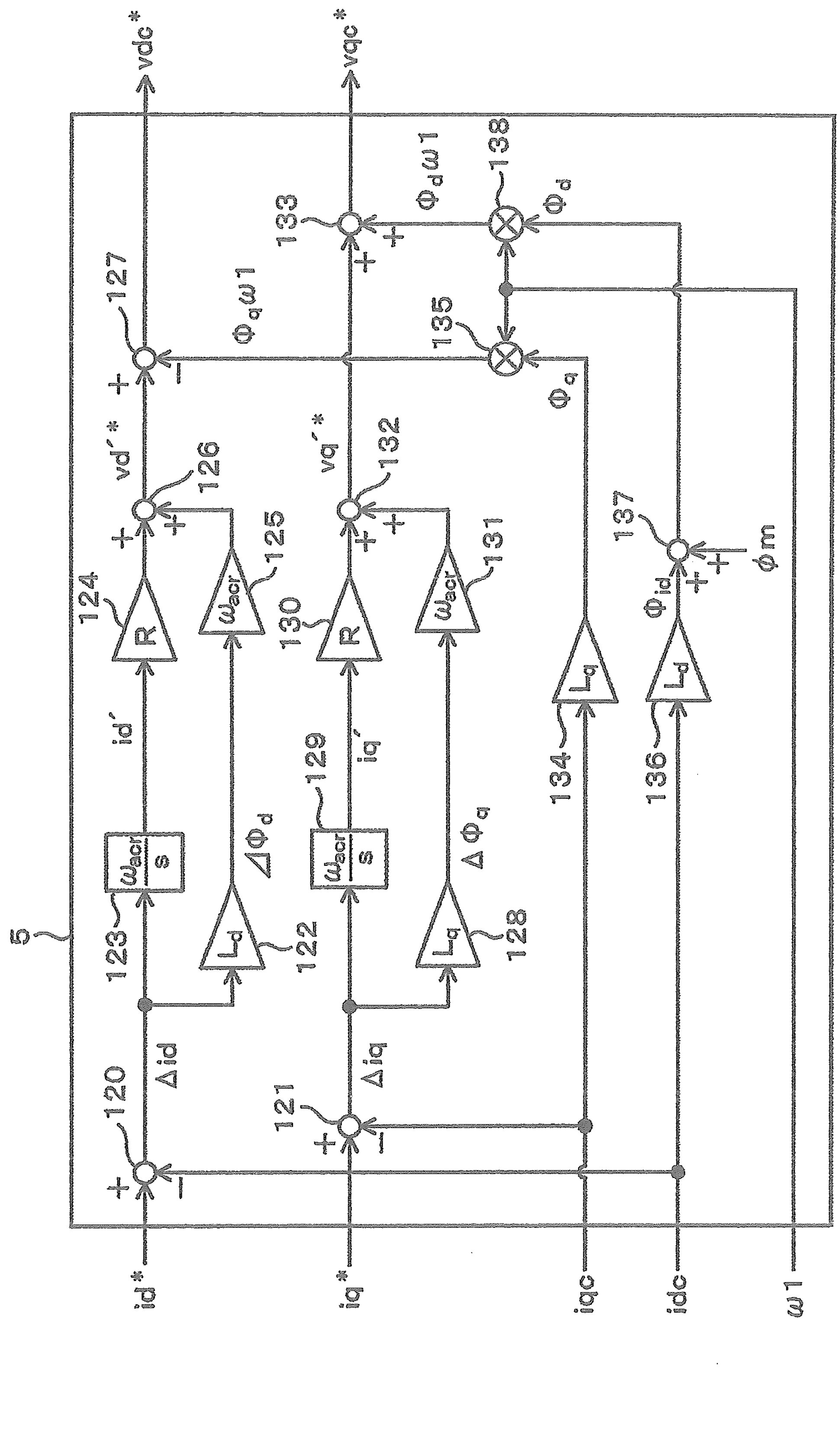
5
id*
iq*
iqc
idc
ω1
vdc*
vqc*
120
121
122
123
124
125
126
127
128
129
130
131
132
133
134
135
136
137
138
Δid
Δiq
id´
iq´
ΔΦd
ΔΦq
vd´*
vq´*
Φqω1
Φdω1
Φq
Φd
Φid
φm
R
Ld
Lq
ωacr
ωacr/s

FIG.10A

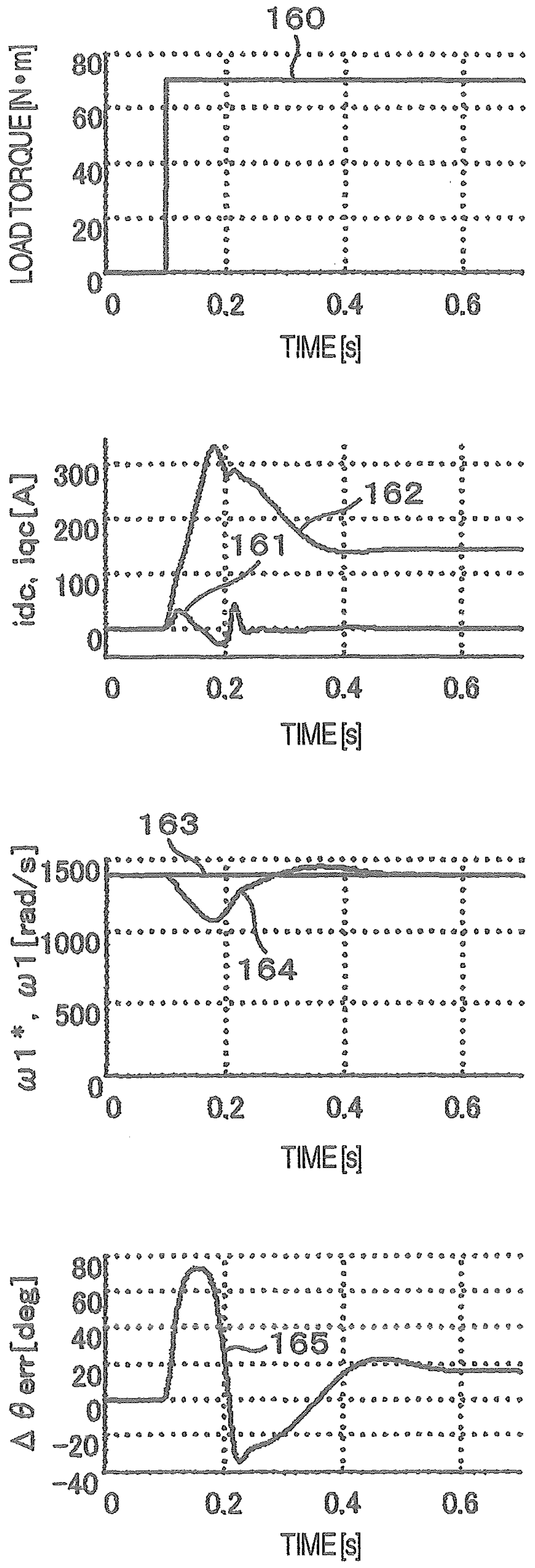


FIG.10B

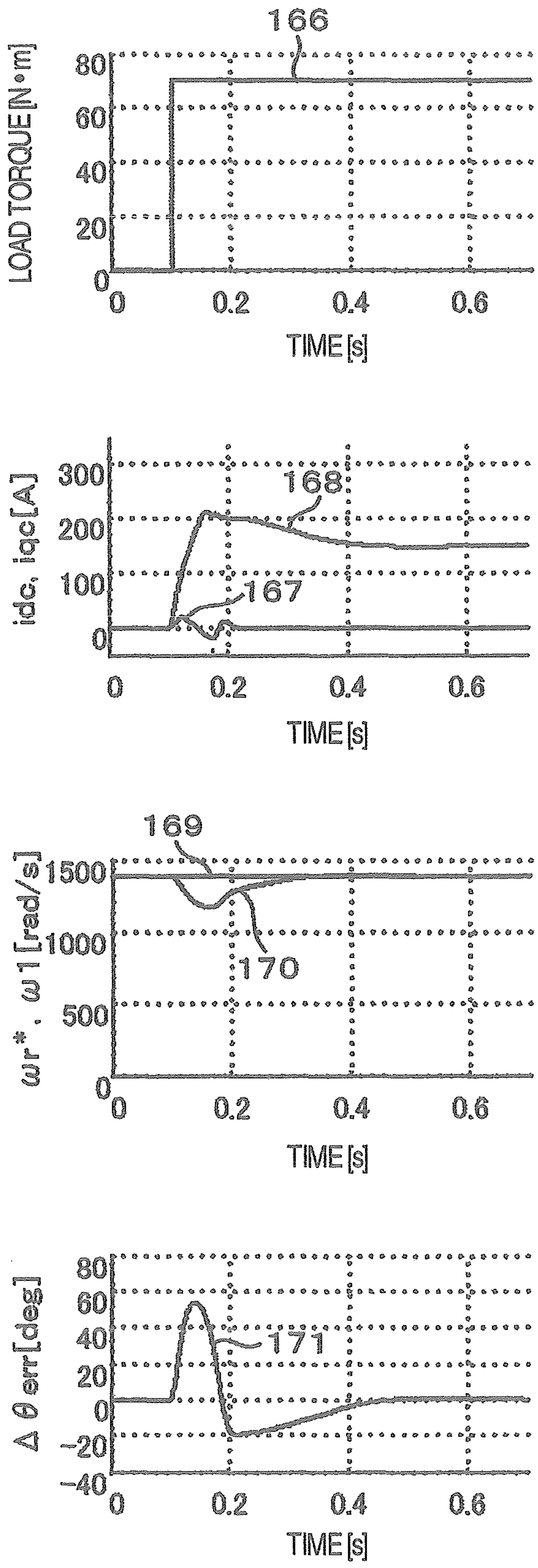

FIG.11

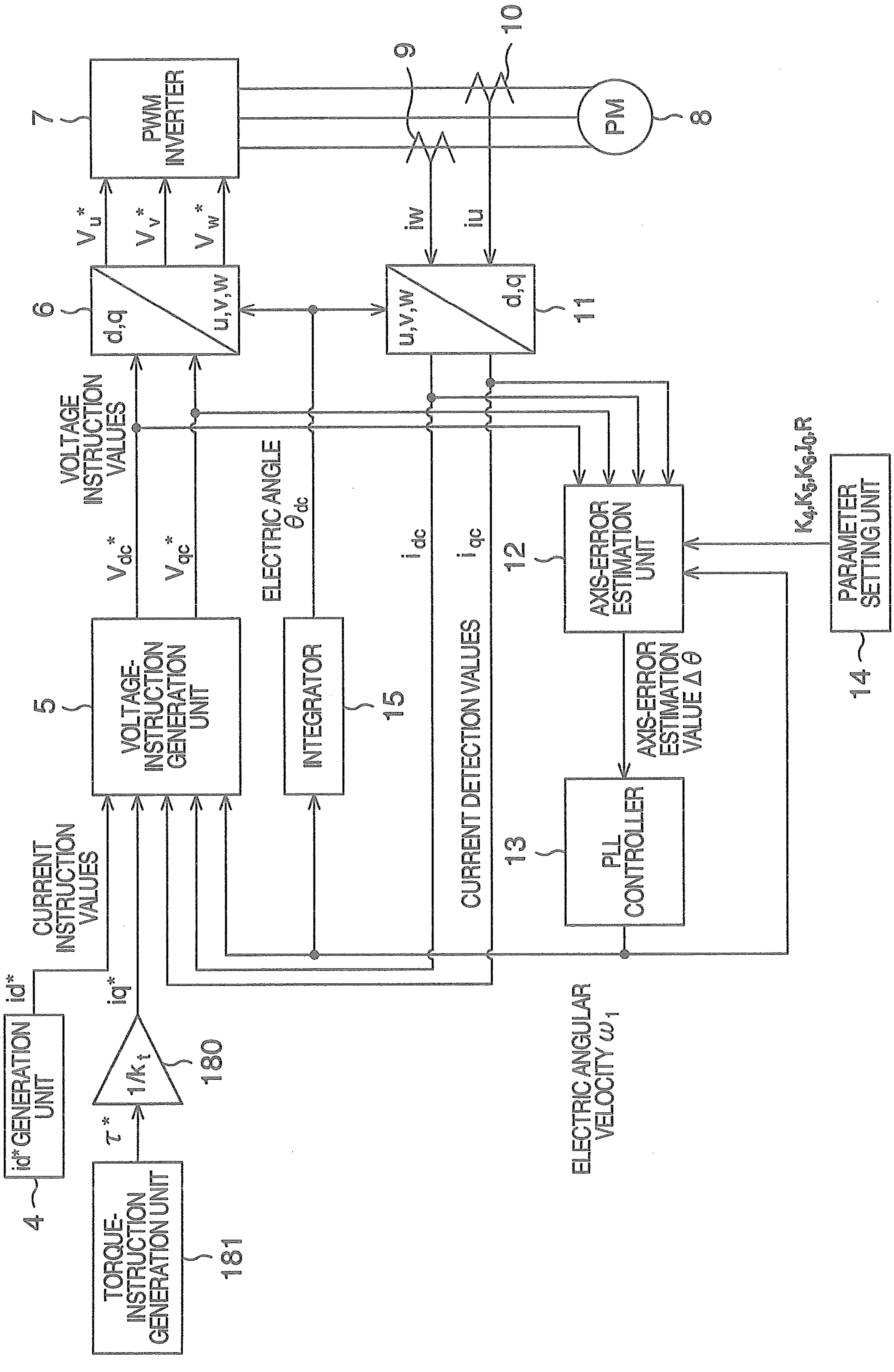
7
PWM INVERTER
8
PM
9
10
$V_u$*
$V_v$*
$V_w$*
6
d,q
u,v,w
11
iw
iu
VOLTAGE INSTRUCTION VALUES
$V_{dc}$*
$V_{qc}$*
ELECTRIC ANGLE $\theta_{dc}$
$i_{dc}$
$i_{qc}$
5
VOLTAGE-INSTRUCTION GENERATION UNIT
15
INTEGRATOR
CURRENT DETECTION VALUES
12
AXIS-ERROR ESTIMATION UNIT
AXIS-ERROR ESTIMATION VALUE $\Delta\theta$
13
PLL CONTROLLER
14
PARAMETER SETTING UNIT
$K_4,K_5,K_6,L_q,R$
CURRENT INSTRUCTION VALUES
id*
iq*
4
id* GENERATION UNIT
180
1/$k_t$
$\tau$*
181
TORQUE-INSTRUCTION GENERATION UNIT
ELECTRIC ANGULAR VELOCITY $\omega_1$

FIG.12

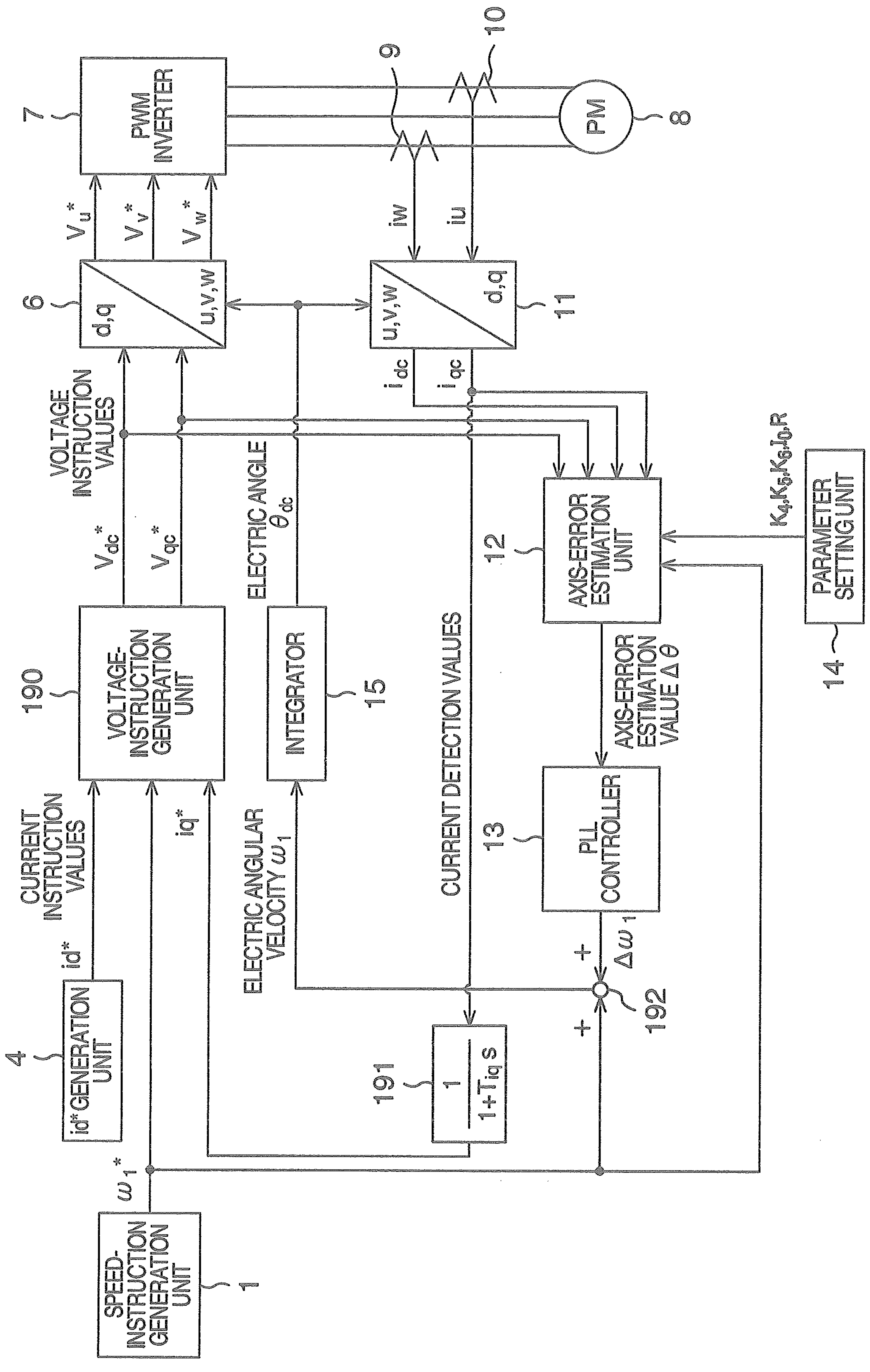

SPEED-INSTRUCTION GENERATION UNIT
1
$\omega_1^*$
id* GENERATION UNIT
4
id*
CURRENT INSTRUCTION VALUES
iq*
VOLTAGE-INSTRUCTION GENERATION UNIT
190
$V_{dc}^*$
$V_{qc}^*$
VOLTAGE INSTRUCTION VALUES
d,q
u,v,w
6
$V_u^*$
$V_v^*$
$V_w^*$
PWM INVERTER
7
PM
8
9
10
iw
iu
u,v,w
d,q
11
$i_{dc}$
$i_{qc}$
INTEGRATOR
15
ELECTRIC ANGLE $\theta_{dc}$
ELECTRIC ANGULAR VELOCITY $\omega_1$
CURRENT DETECTION VALUES
191
$\frac{1}{1+T_{iq}s}$
192
+
+
$\Delta\omega_1$
PLL CONTROLLER
13
AXIS-ERROR ESTIMATION VALUE $\Delta\theta$
AXIS-ERROR ESTIMATION UNIT
12
$K_4,K_5,K_6,J_0,R$
PARAMETER SETTING UNIT
14

FIG.13

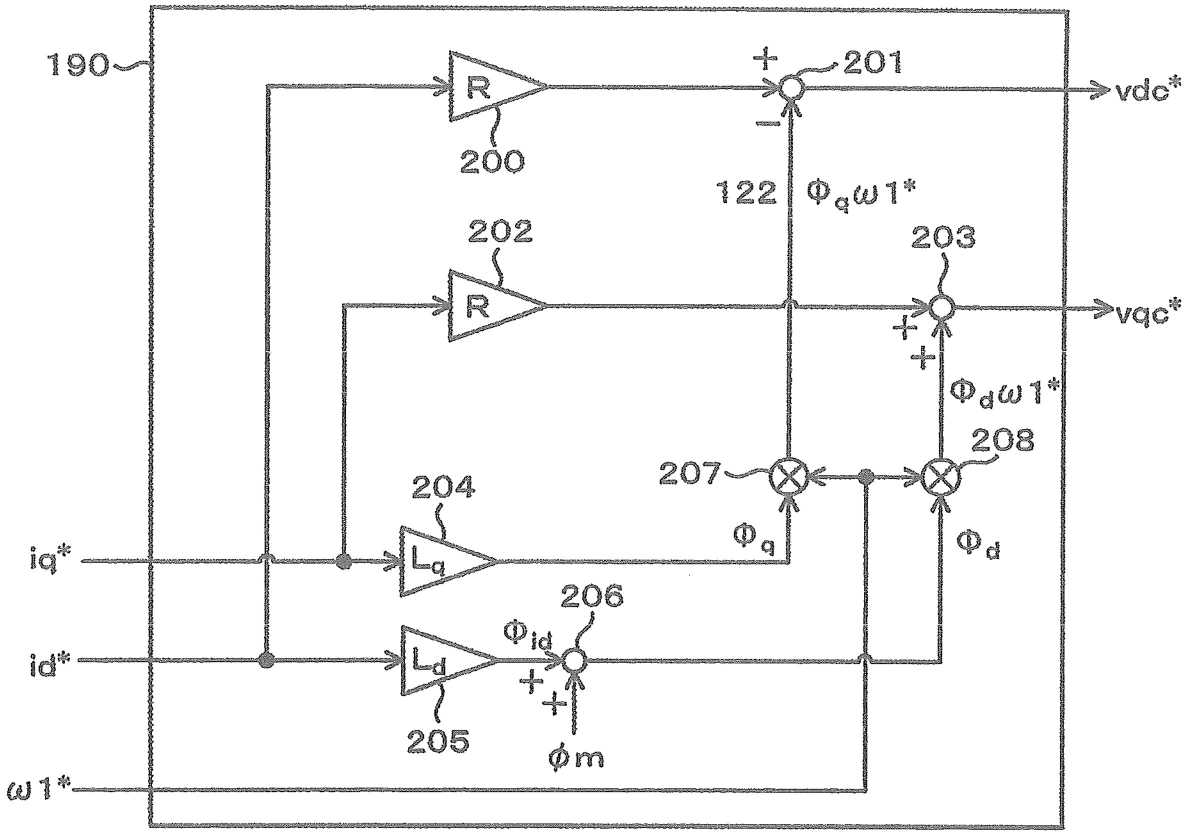
190
R
200
+
201
−
vdc*
122
$\Phi_q\omega1^*$
202
R
203
vqc*
+
+
$\Phi_d\omega1^*$
207
208
204
$L_q$
$\Phi_q$
$\Phi_d$
iq*
206
$\Phi_{id}$
id*
$L_d$
+
+
205
$\phi m$
$\omega1^*$

FIG.14

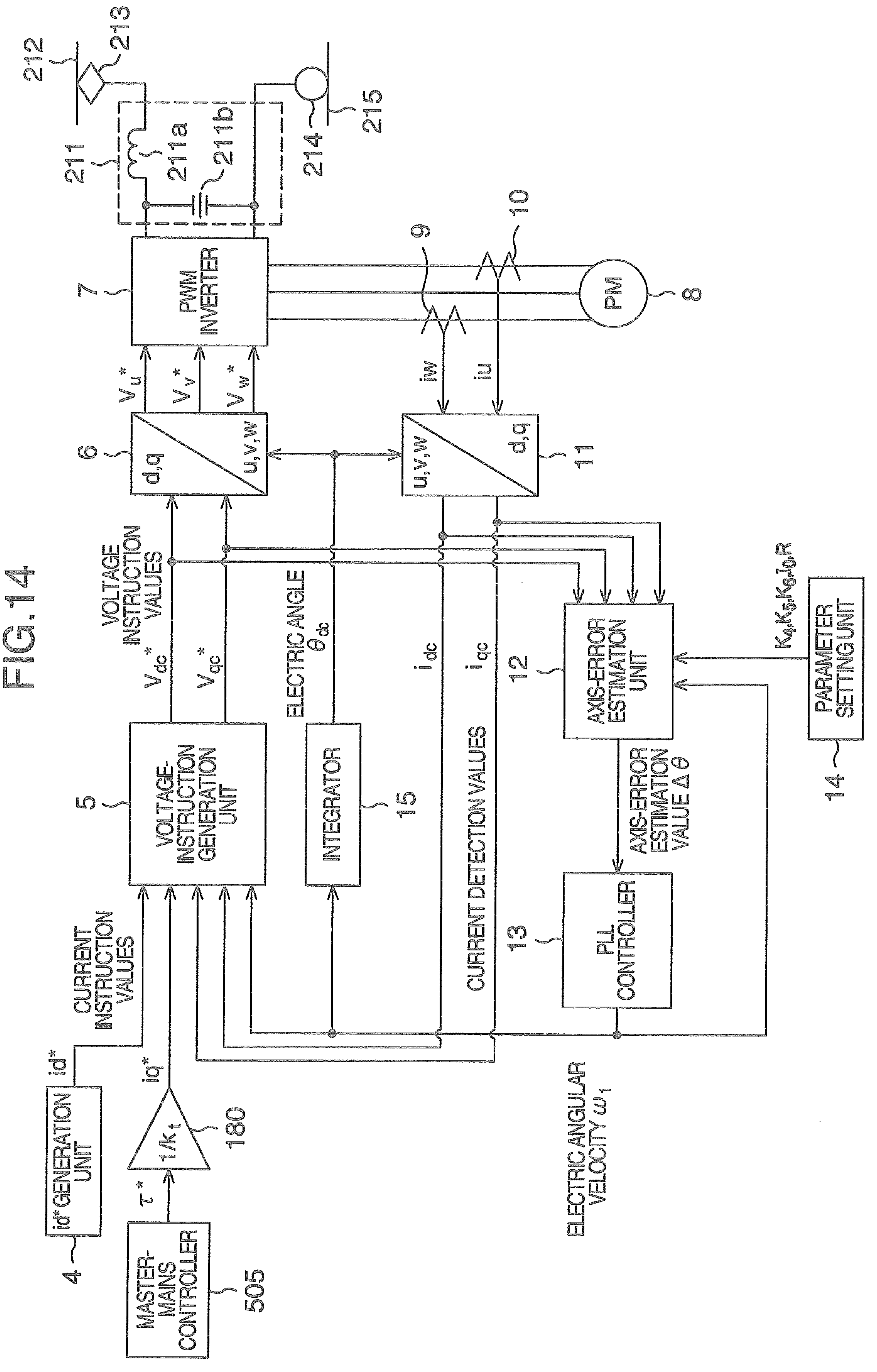

212
213
211
211a
211b
214
215
7
PWM INVERTER
8
PM
9
10
$V_u^*$
$V_v^*$
$V_w^*$
iw
iu
6
d,q
u,v,w
11
VOLTAGE INSTRUCTION VALUES
$V_{dc}^*$
$V_{qc}^*$
ELECTRIC ANGLE $\theta_{dc}$
$i_{dc}$
$i_{qc}$
12
AXIS-ERROR ESTIMATION UNIT
$K_4, K_5, K_6, J_0, R$
PARAMETER SETTING UNIT
14
5
VOLTAGE-INSTRUCTION GENERATION UNIT
INTEGRATOR
15
CURRENT DETECTION VALUES
AXIS-ERROR ESTIMATION VALUE $\Delta\theta$
13
PLL CONTROLLER
CURRENT INSTRUCTION VALUES
id*
iq*
id* GENERATION UNIT
4
$1/k_t$
180
$\tau^*$
MASTER-MAINS CONTROLLER
505
ELECTRIC ANGULAR VELOCITY $\omega_1$

FIG.15

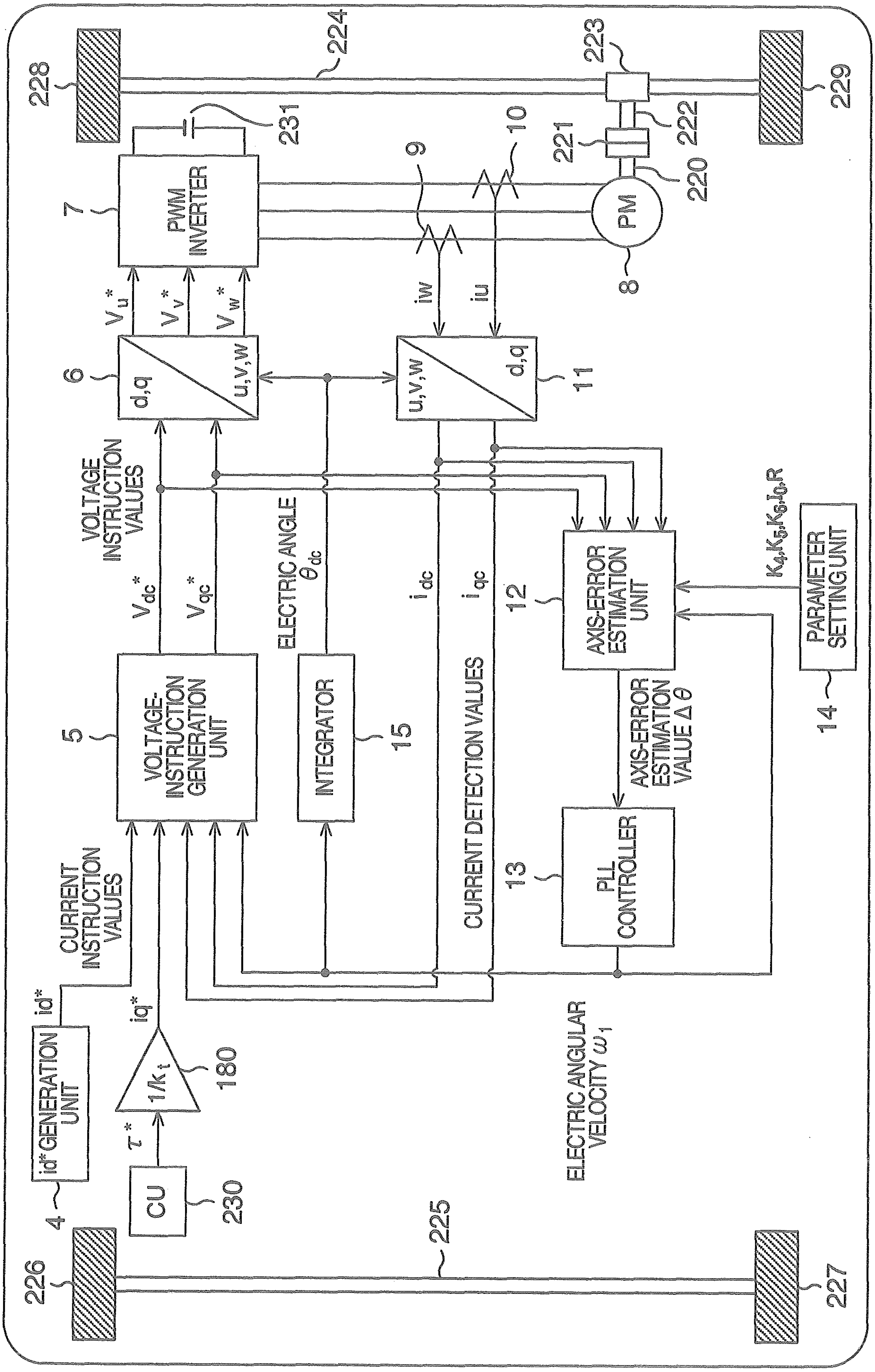
228
224
223
229
222
231
221
220
7
PWM INVERTER
9
10
PM
8
6
d,q
u,v,w
11
iw
iu
VOLTAGE INSTRUCTION VALUES
ELECTRIC ANGLE $\theta_{dc}$
$V_{dc}^*$
$V_{qc}^*$
$i_{dc}$
$i_{qc}$
12
AXIS-ERROR ESTIMATION UNIT
$K_4,K_5,K_6,L_d,R$
PARAMETER SETTING UNIT
14
AXIS-ERROR ESTIMATION VALUE $\Delta\theta$
5
VOLTAGE-INSTRUCTION GENERATION UNIT
INTEGRATOR
15
CURRENT DETECTION VALUES
13
PLL CONTROLLER
CURRENT INSTRUCTION VALUES
id*
iq*
id* GENERATION UNIT
$1/K_t$
180
$\tau^*$
CU
230
4
ELECTRIC ANGULAR VELOCITY $\omega_1$
225
226
227

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008141835 A
- US 20030052640 A1
- US 20090140674 A1


### Non-patent literature cited in the description


- Simplified Vector Control Over Home-Electric-Appliance-Directed Position Sensorless Permanent-Magnet Synchronous Motor. *Electricity Treatise D,* 2004, vol. 124 (11
- Realistic Theory and Design of AC Servo System. General Electronic Publishing Corp,